# EUROPÄISCHE PATENTSCHRIFT

(11) **EP 2 003 356 B1**
(45) Veröffentlichungstag und Bekanntmachung des Hinweises auf die Patenterteilung: **29.01.2014**
(21) Anmeldenummer: 08156419.7
(22) Anmeldetag: 19.05.2008
(51) Int. Cl.: F16D 23/06

(54) **Getriebesynchronisation und Druckstück einer Getriebesynchronisation**
Gear synchronisation and pressure pad of a gear synchronisation
Synchronisation de boîte de vitesse et plaque d'appui d'une synchronisation de boîte de vitesse

(30) Priorität: 28.05.2007 DE 102007025022
(43) Veröffentlichungstag der Anmeldung: 17.12.2008
(73) Patentinhaber: hofer-PDC GmbH, 70327 Stuttgart (DE)
(72) Erfinder: Steinz, Janina, Dipl.-Ing. (FH), 64584 Biebesheim (DE); Kalmbach, Klaus, Dr.-Ing., 72116 Mössingen (DE); Scheihing, Harald, Dipl.-Ing., 70825 Korntal- Münchingen (DE)
(74) Vertreter: Cremer, Christian

(56) Entgegenhaltungen:
- EP-A1- 0 957 279
- EP-A1- 1 072 811
- EP-A1- 1 724 483
- DE-C1- 10 006 347
- FR-A1- 2 760 261
- FR-A1- 2 846 721
- US-A- 5 638 930

## Beschreibung

Die vorliegende Erfindung betrifft eine Synchronisation eines Getriebes, insbesondere eine Synchronringsynchronisation mit einer unterliegenden Feder. Die Feder zeichnet sich dadurch aus, dass deren Funktion des Ansynchronisierens um mehrere Funktionen erweitert wird.

### Stand der Technik

Beispielhaft kann zur konstruktiven Gestaltung eines typischen Getriebeaufbaus auf die technischen Dokumentationen der Volkswagen AG zum Sechs-GangSchaltgetriebe 08D verwiesen werden. Weiterhin lässt sich eine weithin bekannte, ähnlich gestaltete Synchronisation in dem Fachbuch "Fahrzeuggetriebe" der Autoren G. Lechner und H. Naunheimer, ISBN 3-540-57423-9, nachlesen. Beide Referenzen werden in ihrem Offenbarungsumfang vollinhaltlich als Grundlagendarstellungen zur Getriebetechnik und der Getriebesynchronisation inkludiert, um im Folgenden die allgemeinen Begriffe der Getriebesynchronisation nicht noch einmal ausladend darstellen zu müssen.

Auch sind grundlegende Darstellungen zu einzelnen Aspekten der Getriebesynchronisation in den zum Anmeldezeitpunkt unveröffentlichten Druckschriften DE 10 2006 044 352.7 und DE 10 2006 051 399.1 und in dem veröffentlichten Patent DE 10 2005 040 400 B3 offenbart, deren Inhalt als Offenbarungsumfang in die vorliegende Anmeldung vollinhaltlich inkludiert ist.

Die üblichen Einzelteile einer Einfachkonussynchronisierung sind das Gangrad, der Kupplungskörper, ein oder mehrere Synchronringe, der Synchronkörper, die Druckfeder, der Kugelbolzen, eines oder mehrere Druckstücke und eine Schalt- bzw. Schiebemuffe. Das Gangrad kann ein nadelgelagertes Losrad sein. Der Kupplungskörper ist häufig mit hinterlegter Schaltverzahnung und einem Reibkonus außen ausgestattet. Der Synchronring ist über Anschlagnasen im Synchronkörper geführt. Diese sind schmaler als die Nuten im Synchronkörper, so dass sich der Synchronring um einen bestimmten Betrag radial verdrehen kann, das als Umschlagspiel bezeichnet wird. Der Gegenkonus sitzt innen, die Verbindung zur Welle erfolgt über die Lagerung im Synchronkörper. Die Sperrverzahnung liegt außen und ist auf dem Synchronring angebracht. Der Synchronring ist Hauptfunktionsträger der Synchronisierung. Der Synchronkörper ist mit einer Steckverzahnung innen ausgestattet, die den Formschluss mit der Welle gewährleistet. Die Druckfeder gewährleistet die Flexibilität der Druckstücke. Der Kugelbolzen ist in den Rastnuten der Schiebemuffe gelagert (in der Neutralstellung). Das Druckstück rastiert über Druckfeder und Kugelbolzen in der Schiebemuffe. Die Schiebemuffe ist mit hinterlegter Schaltverzahnung (Schaltklauen) innen ausgestattet.

Beim Gangwechsel besteht zunächst eine Drehzahldifferenz zwischen der Welle und dem zu schaltenden Losrad, resultierend aus dem zu überwindenden Übersetzungssprung i. Die Sperrsynchronisierung sorgt für einen kraftschlüssigen Drehzahlangleich zwischen Losrad und Welle, insbesondere Antriebs- oder Abtriebswelle, vor dem Aufbau einer formschlüssigen Verbindung. Nach einer gängigen Beschreibung lässt sich der Synchronisationsvorgang in fünf Phasen unterteilen. Die Phasen sind als Phase I (Ansynchronisieren), als Phase II (Synchronisation), als Phase III (Entsperren), als Phase IV (Freiflugphase) und abschließend als Phase V (Einspurphase) zu charakterisieren.

Nach einer bekannten Ausgestaltung wird über eine Einfach- oder Mehrfachkonussynchronisation eines Synchronringes der Gleichlauf zwischen zwei Rädern, zum Beispiel einem Festrad und einem Losrad, zur Kraftübertragung von einer An- zu einer Abtriebswelle eines Handschaltgetriebes, in der Regel unter Zwischenschaltung einer oder mehrerer Vorgelegewellen für die meisten Vor- und Rückwärtsgänge, wenn nicht sogar für alle, realisiert. Mit einer Schaltmuffe, die insbesondere als Schiebemuffe ausgelegt ist, wird nach dem Eingreifen der Schaltmuffenverzahnung zwischen die Zähne der Synchronringverzahnung und der Kupplungskörperverzahnung, die auch als Sperrverzahnung bezeichnet wird, eine formschlüssige Kraft- und Drehmomentenübertragung von einem Festrad auf ein ausgewähltes Losrad des Getriebes verwirklicht. In einem Synchronkörper werden Druckstücke, häufig über den kreisförmigen Umfang gleich verteilte, zwischen der Außenverzahnung des Synchronkörpers eingelassen, damit das Druckstück oder die Druckstücke bei der Ansynchronisierung behilflich ist bzw. sind. Das Druckstück, im Folgenden wird der Singular auch an Stelle des Plurals und umgekehrt verwendet, wird zum Ansynchronisieren an den Synchronring angelegt, gewährleistet so ein Aneinanderanlegen der Reibbeläge. Hierbei ist das Druckstück nach einer Ausgestaltung häufig mehrteilig aufgebaut. Bei vielen Druckstücken ist aber üblich, dass sie längsbeweglich angeordnet oder gelagert sind, um in Verschieberichtung der Schaltmuffe eine Ausgleichsbewegung durchführen zu können.

Die weithin bekannte Ausführungsform, das Rastieren der Schiebemuffe mit einem federvorgespannten, insbesondere kugelförmig gestalteten, Rastelement als Teil des mehrteiligen Druckstücks, das auf der Unterseite der Schiebemuffe eingreift, umzusetzen, kann den Figuren des deutschen Gebrauchsmusters DE 200 22 345 U1 entnommen werden. Die unter dem Rastelement liegende Feder lässt sich zum Beispiel, so wie in dem deutschen Patent DE 10 2004 036 507 B3 bzw. in dem äquivalenten Familienmitglied der europäischen Patentfamilie EP 1 624 212 A1 dargestellt, in einer Hülse führen. Alternativ lässt sich auch ein J-förmiger Bügel, so wie in dem deutschen Patent DE 196 32 250 C2 abgebildet, zur Federführung nutzen. Weitere Darstellungen eines Druckstücks mit Schraubenfeder zum Andrücken eines Rastelements an die Schiebemuffe, insbesondere in eine nach innen in die Schiebemuffe geformte Rastnut, können den Druckschriften DE 195 80 558 C1, DE 199 41 794 A1, KR-A-10 2001 000 3003 und DE 31 25 424 C2 entnommen werden.

Aus der DE 101 29 097 A1, auch unter der Nummer EP1 270 975 B1 als Patent erteilt, sind zwei unterschiedliche Ausführungsbeispiele eines Federelements (eingezeichnet mit den Bezugszeichen 17 und 18) entnehmbar, das entweder als Schraubenzugfeder oder als bügelförmige Feder die Synchronringe umgreift, um sie in Richtung auf den dazwischen liegenden Gleichlaufkörper zu ziehen. Hierdurch soll der Reibkoeffizient genutzt werden, damit eine Relativbewegung zwischen Gleichlaufkörper und Synchronring in einer Ausgangsstellung unterbunden werden kann. Die Feder ist als zusätzliches Bauteil in der Getriebesynchronisation neben bisher bekannten Druckstücken integriert worden. Das Spiel der Synchronringe wird dadurch unterbunden, dass die Getriebesynchronisation nicht nur Druckstücke, sondern auch Spannfedern aufweist.

In den kompletten Synchronisationseinheiten darstellenden Figuren des deutschen Patents DE 100 06 347 C1 ist eine ein Rastelement unterliegende blattartige Feder zu sehen, die konstruktiv die Darstellungen aus der DE 200 22 345 U1 mit den Darstellungen der DE 101 29 097 A1 vereint. In dem Patent wird erklärt, dass eine Feder den nicht funktionsmäßig nutzbaren Bauraum minimiert.

Von dem Konzept der Minimierung des Bauraums für ein Druckstück weggehend weisen die Druckschriften DE 101 36 906 A1, DE 102 30 177 A1, auch als WO 2004/005739 A1 veröffentlicht, DE 102 25 269 A1, DE 103 37 588 A1 und DE 102 31 602 A1 den Weg, das ursprünglich massiv ausgestaltete Druckstück in seinen äußeren Konturen durch ein Blechformteil nachzubilden, dessen Innenraum hohl ist. Der Austausch eines massiven Druckstücks durch mehrere Blechformteile, so wie oben benannt, scheint schon gegenüber früher gemachten Entwicklungen, z. B. wie in der DE 100 06 347 C1 beschrieben, in Bezug auf die bessere Nutzung eines federartigen Druckstücks, trotz dass die Entwicklungen erst in den Jahren 2001 bis 2003 gemacht worden sind und damit später entwickelt worden sind, nur nachteilig zu sein.

Aus Gründen der Vollständigkeit seien noch die beiden Konzepte der US 5 113 986 und der DE 101 36 429 C1 benannt.

Die US 5 638 930 A, DE 10 2005 023 248 A1, DE 202 16 782 U1 und EP 0 870 941 A1 zeigen in zahlreichen Ausführungsformen aus Blech dreidimensional geformte, insbesondere kastenförmige bzw. gehäuseförmige Druckstücke, die freilaufend in einem Synchronkörper einzulegen sind.

Ideen, das Rastieren in die Synchronisation zu verschieben, wobei hierzu zusätzliche Bauteile und Elemente notwendig sind, können einzelnen Ausführungsformen der FR 2 846 721 A1 und der DE 101 36 906 A1 entnommen werden, wenn unter dem Begriff "rastierend" ein erhöhter Kraftaufwand für das Schieben der Schiebemuffe angesehen wird.

Grenzen in der Auslegung des federartigen Druckstücks werden in der US 2 160 091 durch eine Doppelplättchenverstärkung eines flachen Kugelaufnahmebleches gelöst, was wiederum zur dickeren Gestaltung des eigentlich dünn gewünschten Druckstücks führt.

Aufgrund der Relativbewegung zwischen Druckstücken und Schiebemuffe während des Schaltvorgangs beeinflusst die Reibung die Funktion der Druckstücke in besonderem Maße. Trotz des Ölfilms zwischen beiden Teilen ist diese stark von der Oberflächengüte der Teile und der anliegenden Federkraft abhängig. Besonders bei den Ausführungen mit Ringfeder wirkt sich ein durch die Reibung auftretendes Phänomen besonders stark aus. Das liegt zum einen am höheren Reibwert und zum anderen daran, dass die Federringe in eine Richtung (von der Schiebemuffe weg) ein axiales Spiel haben, das zum Ansynchronisieren benötigt wird.

Bei einer Möglichkeit zur Arretierung der Schiebemuffe erfolgt die Rastierung über eine an einem Schaltfinger angebrachte Rastkontur, in die eine federbelastete Arre eingreift. Der Schaltfinger ist fest mit der Schaltwelle verbunden, über welche die Wähl- und Schaltbewegungen ausgeführt werden. Oft werden Rastkonturen auch direkt in die Schaltwelle eingearbeitet. Nach einer weiteren Variante ist eine Schwingenschaltung mit an den Schwingen angebrachten Rastkonturen und zusätzlichen Verriegelungen bekannt, die für diesen Schaltungstyp mit nur einer Schaltwelle nötig sind, da die Schaltwelle nur in der gewählten Gasse mit der zugehörigen Schwinge in Verbindung steht und eine Bewegung der Schwingen unabhängig von der Schaltwelle vermieden werden muss.

Es ist bekannt, eine zusätzliche Rastierung für Neutralstellung und eingelegten Gang in einem Schaltdom anzuordnen. Nach einer beispielhaften Ausgestaltung wird die Neutralstellung so rastiert, dass sich der Schalthebel in dieser immer in der Schaltgasse für den dritten und vierten Gang befindet.

Von den vorgestellten Mechanismen werden immer mehrere in ein Schaltungssystem integriert, so dass in den meisten bekannten Fällen eine Schaltschienenrastierung pro Schiene mit jeweils einer Rastierung im Dom und einer an der Schaltwelle zusammenwirken.

Die EP 1 072 811 A1 beschreibt eine Synchronisationseinheit, die in dem Losrad Ausnehmungen aufweist, in denen in radial verlaufenden Armen zweier Ringe drei elastische Elemente eingehangen sind, sodass über solche Ringe im Totpunkt ein schädliches Verhalten der Getriebesynchronisation möglichst verringert wird.

### Aufgabenstellung

Die Minimierung des nicht funktional belegten Bauraums eines Druckstücks ist eine interessante Überlegung. Idealerweise soll das Druckstück materialsparend herstellbar sein. Durch eine Minimierung des Bauraums lassen sich die übrigen Synchronisationsbauteile der Getriebesynchronisation stärker, dicker oder kräftiger auslegen, weil sie keinen weiteren Bauraum an den Bewegungsfreiraum des Druckstücks, also dem schwing-, klapp-, längs- oder drehbeweglichen Raum, und an das Druckstück selber abgeben müssen. Weiterhin ist es erwünscht, die Zuverlässigkeit der Getriebesynchronisation nicht nur durch die Auslegung der einzelnen Bauteile zu erhöhen, sondern auch funktionell die Zuverlässigkeit zu garantieren.

Eine Getriebesynchronisation sollte daher so ausgelegt werden, dass ein Gangspringen, d. h. ein selbständiges Auslegen eines Ganges, möglichst vermieden wird. Ideal wären ein Wegfall der Schaltschienenrastierungen und die dadurch einhergehende Minimierung der Kosten des Getriebes. Natürlich sollte das Auftreten von Geräuschen durch die Unterbindung von Schwingungen möglichst gering sein. Bei jedem Getriebe steht nach einem Aspekt die Verbesserung des Wirkungsgrades durch Vermeidung ungewollter Kontakte zwischen den Reibflächen im Vordergrund. Hierzu gehört z. B. auch das bekannte Phänomen des Gegensynchronisierens beim Gangauslegen. Dem Konstrukteur eines Getriebes ist daran gelegen, die Toleranzkette möglichst zu verkürzen. Zwischen diesen zahlreichen, zum Teil sich widersprechenden Forderungen ist durch die konstruktive Lösung der Getriebesynchronisation ein geeigneter Kompromiss zu bilden.

### Erfindungsbeschreibung

Ein erfindungsgemäßer Gegenstand nach Anspruch 1 trägt zur erhöhten Zuverlässigkeit eines Getriebes bei. Insbesondere eine Getriebesynchronisation nach Anspruch 4 reduziert den Bauteilaufwand bei gleichzeitiger hoher Zuverlässigkeit. Ein geeignetes Verfahren zum Betreiben einer Getriebesynchronisation wird in Anspruch 15 beschrieben.

Vorteilhafte Weiterbildungen sind den abhängigen Ansprüchen zu entnehmen.

Eine Getriebesynchronisationseinheit soll gem. obiger Auflistung verschiedene Phasen zur Verfügung stellen. Hierzu gehört auch die Fähigkeit zum Synchronisieren. In der Regel soll wenigstens ein Losrad, häufig eines von zwei Losrädern wechselweise, durch die Synchronisationseinheit synchronisierbar sein. Weiterhin soll in der Getriebesynchronisationseinheit eine Überschiebefunktion vorhanden sein. Als Überschiebefunktion wird in einer Betrachtungsweise die örtliche Beziehung bezeichnet, die eine Schaltmuffe bzw. eine Schiebemuffe in Bezug auf die Schalt- und Sperrverzahnung einnimmt, bevor die eigentliche Synchronisationsphase beginnt. Diese Phase kann auch als Freiflugphase beizeichnet werden. Eine blattähnlich geformte Feder kann eine Schaltmuffe in einer Rastposition halten. Neben der Rastposition bietet die Feder einen Ansynchronisationsbereich und die Überschiebefunktion für die Getriebesynchronisation. Das bedeutet, die flache, längsausgestreckte Feder, die sich entlang der Achse der unterliegenden Welle wie einer Antriebs- oder einer Abtriebswelle erstreckt, weist mehrere funktionelle Bereiche auf, nämlich den Ansynchronisationsbereich, die Überschiebefunktion und die Rastierposition. Die mehrfache Integration unterschiedlicher Funktionen in ein Bauteil der Getriebesynchronisation sorgt für einen äußert kompakten Aufbau. Weiterhin verkürzt das Zusammenlegen der Funktionen in ein Bauteil die Toleranzketten.

Nach einem interessanten Aspekt liegt die rastierte Position in der Neutralposition vor. Die Neutralposition ist die Position der Schaltmuffe, zu der die Schaltmuffe mit keinem der Losräder in Eingriff steht. Die Neutralposition ist dort, wo die Schaltmuffe entfernt von dem einen Losrad, insbesondere zwischen den Losrädern, vorzugsweise mittig, platziert ist. Eine weitere, zweite Rastposition wird durch die Feder im geschalteten Zustand, beim Eingriff der Schaltmuffe mit der Kupplungsverzahnung des Losrades, gefunden. Die beiden Rastpositionen sind räumlich beabstandet. Die Schaltmuffe ist somit in verschiedenen Stellungen durch die Feder rastiert. Die Rastierungen tragen zur Zuverlässigkeit der Getriebesynchronisation bei und übernehmen zum Teil die Funktionen der örtlich entfernten Rastierungen.

Die Feder ist funktionell ein Druckstück zur Synchronisationsverbesserung, insbesondere zur Ansynchronisation. Die Erweiterung der Funktion wird zwischen einer Sperrverzahnung und einer Kupplungsverzahnung der Schaltmuffe und eines Synchronrings innerhalb der Getriebesynchronisation hergestellt. Die Feder hemmt im Übrigen sonst in der Neutralposition die Schaltmuffe an einer axialen Verschiebung, denn die axiale Verschiebung der Schaltmuffe sollte möglichst kontrolliert geschehen. Das Hemmen einer ungewollten, axialen Verschiebung verhindert im Besonderen ein mehr- oder minder starkes, schwingungsbedingtes Taumeln der Schaltmuffe, das sich nachteilig auf den Schaltkomfort und die reibungslose Funktion der Getriebesynchronisation auswirkt. Eine axiale Verschiebung ist bei einer gezielten Einflussnahme von Außen auf die Getriebesynchronisation möglich, während sonst von sich aus die Schaltmuffe in ihrer Lage ohne äußere Beeinflussung gehalten wird.

Nach einem weiteren Aspekt der Erfindung arbeitet die Getriebesynchronisation nach einem Konussynchronisationsprinzip. Sie benutzt wenigstens ein federartiges, flaches Druckstück, das über wenigstens einen Rand in einem Synchronring, insbesondere über seinen Rändern in zwei Synchronringen, der Getriebesynchronisation eingehängt ist. In der Regel sind mehrere, insbesondere gleichartige Druckstücke vorhanden, die über den Synchronkörper verteilt, vorliegen. Ein mittlerer Teil des Druckstücks erlaubt aus der Sperrposition eine axiale Lageverschiebung einer Schaltmuffe durch eine radiale Bewegung, insbesondere kraftfolgende Ausweichbewegung. Das Druckstück ist den integrierten Funktionen nachgebildet, so dass wenig Raum funktionell bedeutungslos ist. Das Druckstück ist so gestaltet, dass es in seiner Gesamtheit eine Ausweichbewegung durchführen kann.

Idealerweise sind das Druckstück und die Feder ein und dasselbe Bauteil. In ihrer Ausgangslage kann die Feder die Schaltmuffe in einer rastierten Position halten. Die doppelte Integration spart an der Anzahl der benötigten Bauteile. Die Getriebesynchronisation wird einfacher und damit auch günstiger.

Eine Sperrposition ist in einer Neutralposition und eine zweite Rastposition ist in einer geschalteten Rastposition der Getriebesynchronisation vorhanden. Es gibt somit zwei weitere Funktionen in dem Druckstück.

Nur die Feder übernimmt die Funktion eines Druckstücks, so dass keine weiteren, andersformigen Bauteile in der Getriebesynchronisation vorhanden sind, die Druckstückfunktionen übernehmen. Eine Tatsache, die wiederum zur Vereinfachung der Getriebesynchronisation beiträgt.

Das Druckstück, das insbesondere aus einem Federstahl geformt ist, weist einen Ansynchronisationsbereich auf, der eine Drehzahlsynchronisationsanpassung zwischen einer Sperrverzahnung und einer Kupplungsverzahnung der Schaltmuffe und wenigstens einem der Synchronringe fördert. Das Druckstück kann eine Überschiebeposition durch federnde Nachgiebigkeit des Druckstücks, wobei insbesondere das Druckstück eine Federbewegung vollständig über seine Breite durchführt, in radialer Richtung auf eine Welle einnehmen.

Das federartige Druckstück ist auf die Mittelachse der Welle ausgerichtet derart vorgespannt, dass die Synchronringe zueinander in der Getriebesynchronisation an den Synchronkörper angezogen sind, so dass sie taumelfrei gelagert sind. Die Taumelfreiheit trägt zur Wirkungsgradverbesserung und Vermeidung von Rasselgeräuschen des Getriebes bei.

Die Schaltmuffe hat eine Rastkontur auf einer Innenseite, die insbesondere die Form eines gleichschenkligen Trapezes hat. Die Rastkontur kann sich als Rasterhöhung gestalten. Über die Rasterhöhung findet der Eingriff zwischen Schaltmuffe und dem Druckstück statt.

Weiterhin hat die Feder wenigstens einen von der Mittelachse der Welle wegweisenden Anschlagsbogen, der die Sicherung der Rasterhöhung in der Neutralposition vornimmt. Die Gestaltung mit Anschlagsbögen lässt sich einfach durch formgebende Verfahren wie Stanzen, Walzen oder Kanten im industriellen Herstellprozess bilden.

Das Druckstück hat nach einer weiteren Ausgestaltung einen in jede der Schieberichtungen der Schaltmuffe die Bewegung aus der Neutralposition hemmenden Anschlagsbogen. Auch diese Formgebung lässt sich nahezu genauso einfach wie die obige Formgebung herstellen.

Das Druckstück ist so gestaltet, dass es in der Rastposition, insbesondere in der Neutralposition, freitragend bis auf seine Synchronringlagerung und eine, insbesondere zwei, Schaltmuffenrastierung(en) in der Getriebesynchronisation liegt.

Das Druckstück der Getriebesynchronisation sieht wie ein längliches, quaderförmiges, flaches Plättchen aus. Eine solche Form hat wenigstens ein seitliches Ende. Vorzugsweise gibt es zwei gegenüberliegende seitliche Enden, die die schmäleren Seiten des rechteckig, insbesondere quadratisch, ausgestreckten Druckstücks darstellen. Das Druckstück ist einstückig aufgefächert, um einen Haltezapfen eines Synchronrings hierin als Federlager aufnehmen zu können. Das Druckstück sieht an seinen beiden, kürzeren Rändern wie eine Klammer aus. Weil sich eine Klammer aus dem Druckstück herausbildet, werden viele Blechabschnitte des Rohlings im Umformprozess verwendet. Es verbleiben maximal nur kleinere, nicht funktionell genutzte Bereiche.

Nach einer Ausgestaltung hat die Getriebesynchronisation wenigstens eine Ringfeder, wenn nicht sogar zwei gegenüberliegende Ringfedern. Eine Ringfeder liegt an dem Synchronkörper an. Die Ringfeder hat eine von dem Synchronkörper nach Außen wegweisende Spannung. Mit der Spannung wird das Druckstück gegen den Synchronring gespannt, um es an dem Synchronring zu lagern. Nach einem Aspekt erzeugen damit zwei aufeinander wirkende Federn, die Spannfeder und das Druckstück, die nötige Lagesicherung. Alternativ könnte das Druckstück ebenfalls als federndes Element ausgeführt werden und somit zusätzlich gegen die Ringfedem vorgespannt sein.

Das Druckstück ist, insbesondere wenn es aus einem Blech gefertigt ist, ein einstückiges, mehrfach umgeformtes Bauteil. In der Montage erspart man sich den Materialfluss mehrerer Teile. Die Montage vereinfacht sich.

Nach einer weiteren Ausgestaltung wird das Druckstück, das ebenfalls aus Blech gefertigt sein kann, aus zwei Teilen zusammengesetzt. Das Druckstück kann dann spiegelbildlich ausgestaltet sein. Das Druckstück hat in seiner Einbaulage räumlich voneinander abgesetzte Federn, zwischen denen das Druckstück in Neutralposition aufgenommen werden kann. Je nach Ausgestaltung kann dem zusammenhängenden, einstückigen oder dem in seiner ungefähren Mitte geteilten Federdruckstück aus Materialersparnisgründen der Vorzug gegeben werden.

Nach einem weiteren Aspekt der Erfindung lässt sich die Getriebesynchronisation auch um eine Feder herum aufbauen. Die Feder übernimmt druckstückartige Funktionen. Das Druckstück ist federartig gestaltet. Die Feder wird in einer Synchronisationseinheit, insbesondere mehrfach, eingesetzt, so zum Beispiel drei oder fünf Mal. Die Getriebesynchronisation liegt unter der Schaltmuffe. Die Schaltmuffe, die auch als Schiebemuffe zu bezeichnen ist, stellt das radial nach Außen begrenzende Bauteil der Getriebesynchronisation dar. In einer solchen Anordnung kann die Feder einer Synchronisationseinheit eine Ansynchronisationsposition einnehmen. Die Feder weist einen Überschiebebereich auf. Die Feder der Schaltmuffe bietet eine geschaltete Rastposition. Die Feder der Schaltmuffe bietet eine Neutralposition, die örtlich entfernt von der geschalteten Sperrposition ein Rastieren der Schaltmuffe durchführt. Die Feder, ein besonders leicht herzustellendes Bauteil, in welches als eigenschaftsbestimmender Faktor die Materialeigenschaften des Federstahls eingehen, stellt somit zwar ein wichtiges Bauteil der erfindungsgemäßen Getriebesynchronisation dar, das gleichzeitig in der Getriebesynchronisation unscheinbar ist. Viele unterschiedliche Abschnitte der Feder können funktionell genutzt werden.

Die seitlichen Enden der Feder, vorzugsweise die beiden gegenüberliegenden seitlichen Enden der Feder, sind einstückig aufgefächert, um einen Haltezapfen eines Synchronrings hierin als Federlager aufnehmen zu können.

Eine wie zuvor beschriebene Getriebesynchronisation kann nach dem folgenden Getriebesynchronisationsverfahren arbeiten, insbesondere wenn sie ein federartiges Druckstück benutzt, das in wenigstens einen Synchronring eingehängt ist und mit einer Schaltmuffe zusammenwirkt. Die Phasen - Neutrallage, Ansynchronisieren, Synchronisieren, Entsperren, Freiflugphase, Einspurphase und Schaltstellung - können mit einer solchen Getriebesynchronisation durch das erfindungsgemäße Verfahren eingenommen werden, wobei sieben oder mehr unterschiedliche Phasen durchlaufen werden können. Sowohl in der Neutrallage als auch in der Schaltstellung erfolgt ein örtliches Fixieren der Schaltmuffe durch das Druckstück im Sinne einer Rastierung. Die Schaltmuffe ist in wenigstens zwei Lagen gesichert. Ein unkontrolliertes Einlegen und ein unkontrolliertes Auslegen von Gängen sind erschwert.

Die erfindungsgemäße Lehre offenbart zahlreiche konstruktive Umsetzungsmöglichkeiten der Integration der Rastierung in die eigentliche Synchronisierung der Getriebesynchronisation. Durch das Rastieren wird ein örtliches Fixieren der Schaltmuffe ermöglicht. Die Schaltmuffe wird - je nach Getrieberealisierung - an drei Stellen in ihrem axialen Bewegungsspiel gehemmt bzw. örtlich festgehalten. Dies geschieht durch ein mit der Getriebewelle fest verbundenes Element. Das Druckstück schafft durch seine Einhängung in den Synchronring bzw. die Synchronringe einen auf die Getriebewelle bezogenen Fixpunkt. Der Fixpunkt stellt eine Rastierstelle dar. Die Rastierung hindert die Schaltmuffe an der freien axialen Beweglichkeit. Nach einem Aspekt der Erfindung wird durch das Rastieren eine Verbindung zwischen Schaltmuffe und einem mit der Getriebewelle fest verbundenen Element der Getriebesynchronisation in der Weise hergestellt, dass die Schiebemuffe an einer axialen Bewegung, außer es findet eine bewusste Krafteinwirkung von Außen statt, gehindert wird. Somit wird die axiale Fixierung der Schaltmuffe in die Getriebesynchronisation verlegt. Die Getriebesynchronisation zeichnet sich durch das Fehlen externer Rastierungen und Rastierungselemente wie eine Arre aus. Die Getriebesynchronisation ist so aufgebaut, dass das Druckstück die Schaltmuffe von sich aus halten kann. Erst bei externer Krafteinwirkung wird die Rastierung gelöst. Das Druckstück hält die Schaltmuffe fest. Die Schaltmuffe ist durch das Druckstück mehrfach an verschiedenen Stellen des Druckstücks festgehalten. Das Druckstück verspannt die beiden Synchronringe zueinander. Ein Gangspringen wird durch das Druckstück und durch die gegenseitige Verspannung der Synchronringe unterbunden. Das Druckstück ist vorteilhafter Weise einstückig ausgeführt. Die Rastierung ist nur von außerhalb der Getriebesynchronisation zu lösen. Nach einem weiteren Aspekt zeichnet sich die Erfindung durch die Realisierung der Rastierung durch eine getriebesynchronisationsinterne Federkraft, insbesondere eine druckstückinhärente Federkraft, aus.

Funktionell lässt sich die erfindungsgemäße Getriebesynchronisation in den folgenden fünf Funktionen, Funktion i in der Neutralposition, Funktion ii in der Ansynchronisationsposition, Funktion iii in der Überschiebeposition, Funktion iv (a) in der geschalteten Rastposition 1 und Funktion iv (b) in der geschalteten Rastposition 2 und parallel dazu bzw. permanent die Funktion v, die die Synchronringe anzieht, besonders gut verstehen. Ein Rastieren in der Neutralposition erzeugt ein axiales Festhalten der Schaltmuffe (Funktion i). Mittels Druckstück, insbesondere einem speziell hierfür vorgesehenen Bereich des Druckstücks, wird eine Hemmung einer Bewegung der Schiebemuffe relativ zu einem wellenfesten Teil der Getriebesynchronisation erwirkt. Die Bewegung wird durch eine oder nach einer äußeren Krafteinwirkung ermöglicht. Durch die Einwirkung einer Kraft von außen wird die inhärente Federkraft des Druckstücks überwunden. Das Druckstück erzeugt eine aus sich selbst heraus stammende Federkraft, also eine inhärente Federkraft. So wird eine simultane bzw. gleichzeitige Bewegung von Schiebemuffe und Druckstück ermöglicht. Das Druckstück bietet einen Anschlag wie eine Anschlagsbogen oder eine Anlagefläche zum Synchronring. Der Anschlag bzw. Anschlagsbogen gewährleistet eine Bewegung des Synchronrings analog zur Schaltmuffe und zum Druckstück (Funktion ii). Bei einer weiteren axialen Bewegung der Schaltmuffe wird die Rastierung durch eine Ausgleichsbewegung eines Teils des Druckstücks in radialer Richtung überwunden (Funktion iii). Ist die Überschiebeposition verlassen, so schlägt das Druckstück in seinem wellenartigen Bereich um. Die Feder entspannt. Das Druckstück bietet eine weitere, zur Verfügung der Schaltmuffe stehende Rastmulde. Die Schaltmuffe wird erneut rastiert (Funktion iv). Während der Funktionen i und iv werden die Synchronringe permanent aufeinander zugezogen (Funktion v).

Die dargestellte Getriebesynchronisationseinheit entspricht in einigen Teilen bisher bekannten Getriebesynchronisationseinheiten. Somit können die bei einer Einfachund Mehrfachsynchronisation gesammelten Erfahrungen auf eine erfindungsgemäße Getriebesynchronisation mit verbessertem Druckstück übertragen werden. Der Erprobungsaufwand einer erfindungsgemäßen Getriebesynchronisation hält sich in überschaubaren Grenzen.

### Figurenkurzbeschreibung

Die Erfindung kann auch leichter verstanden werden, wenn Bezug auf die beiliegenden Figuren genommen wird, wobei die Figuren zeigen:
- Fig. 1: wesentliche Bauteile einer Getriebesynchronisationseinheit nach einem Konussynchronisationsprinzip,
- Fig. 2: einen Schnitt in Ausschnittsdarstellung durch eine Getriebesynchronisationseinheit nach Fig. 1,
- Fig. 3: ein erstes Ausführungsbeispiel eines erfindungsgemäßen Druckstücks in seitlicher Ansicht,
- Fig. 4: das federartige Druckstück nach Fig. 3 in räumlicher Ansicht,
- Fig. 5: verschiedene Positionen des Druckstücks nach Fig. 3 und 4 zusammen mit einer Schiebemuffe in schematischer Darstellung,
- Fig. 6: eine alternative Ausgestaltung zu Fig. 3,
- Fig. 7: ein weiteres Ausführungsbeispiel eines federartigen Druckstücks,
- Fig. 8: das Druckstück aus Fig. 7 in verschiedenen, ausgewählten Positionen,
- Fig. 9: ein weiteres Ausführungsbeispiel eines federartigen Druckstücks in verschiedenen Positionen,
- Fig. 10: das Druckstück aus Fig. 9 alleine ohne weitere Bauteile in schematischer Darstellung,
- Fig. 11: ein weiteres Ausführungsbeispiel eines federartigen Druckstücks,
- Fig. 12: das Druckstück aus Fig. 11 in verschiedenen Positionen zusammen mit einer Schaltmuffe,
- Fig. 13: eine alternative Ausgestaltung des Druckstücks nach Fig. 7,
- Fig. 14: eine alternative Ausgestaltung des Druckstückes nach Fig. 10,
- Fig. 15: eine alternative Ausgestaltung eines Druckstückes nach Fig. 11,
- Fig. 16: eine alternative Ausgestaltung eines Druckstücks, das durch das Beibehalten wesentlicher funktionaler Bereiche vereinfacht wurde, und
- Fig. 17: die Ausgestaltung nach Fig. 16 in dreidimensionaler Darstellung.

### Geeignete Ausführungsformen

Im Folgenden sind die gleichen bzw. ähnlichen Bezugszeichen für ähnliche bzw. gleiche Teile zwischen den unterschiedlichen Ausführungsformen und Ausgestaltungen gewählt worden, wobei teilweise um jeweils 100 höher nummerierte Bezugszeichen für die unterschiedlichen Ausführungsformen ähnlicher Teile eines erfindungsgemäßen Druckstückes in federartiger Ausgestaltung gewählt worden sind.

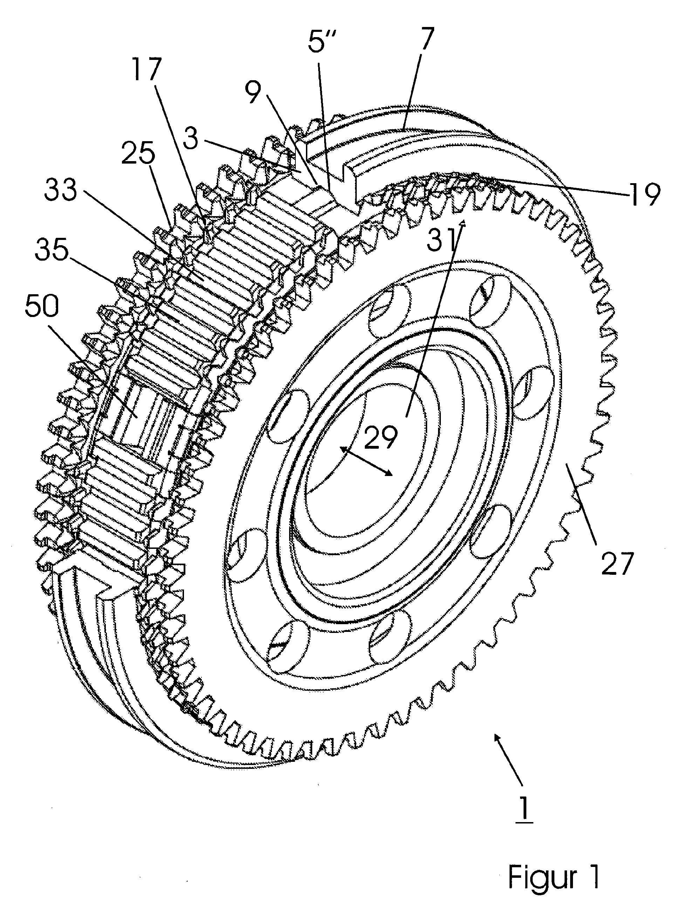

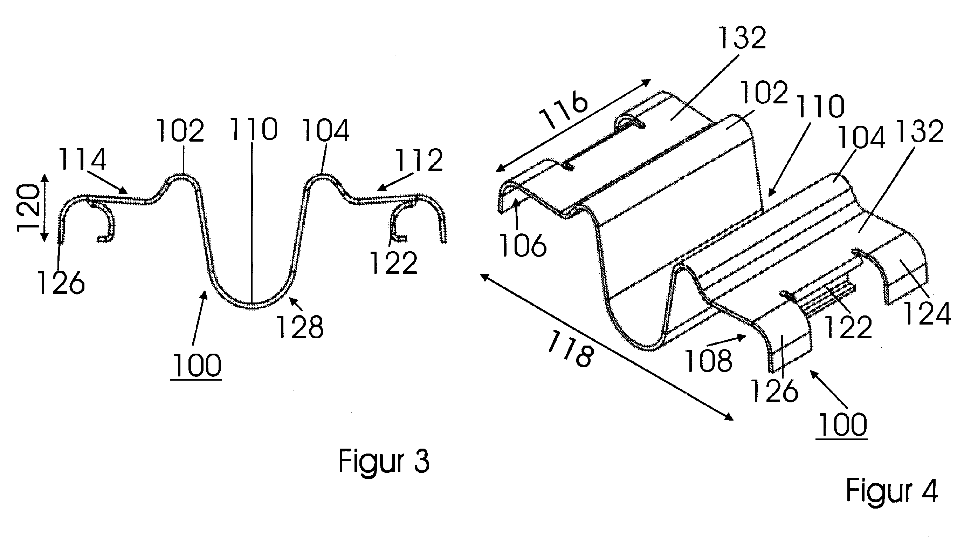

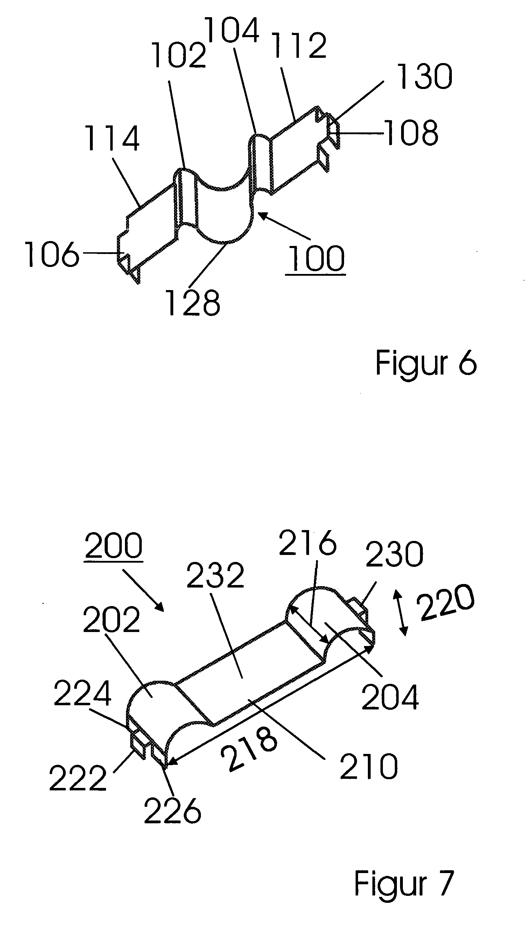

Fig. 1 zeigt wichtige Bauteile einer Getriebesynchronisationseinheit 1, wobei zur Vereinfachung weitere Bauteile, wie z. B. die beiden Losräder 11, 13 und eine zentrale Welle, weggelassen worden sind. Die runde Getriebesynchronisationseinheit 1 ist nach außen durch eine Schaltmuffe 3, die im dargestellten Beispiel eine Schiebemuffe ist, begrenzt. Die Schaltmuffe 3, die sich über 360 Grad eines Winkelmaßes erstreckt, ist über ca. 90 Grad ihrer Länge geschnitten dargestellt, so dass unterhalb der Schaltmuffe 3 ein Synchronkörper 33 zu sehen ist, an dessen Oberfläche eine Synchronkörperaußenverzahnung 35 vorgesehen ist, die in die Schaltmuffe 3 eingreifen kann, um eine Richtungsführung in Richtung der Achse 29 der Getriebesynchronisationseinheit 1 sicherzustellen. Auf der Außenseite der Schaltmuffe 3 kann nach einem Ausführungsbeispiel eine umlaufende Ringnut 7 vorgesehen sein, in die ein nicht dargestelltes Schaltgestänge mit einer, ebenfalls nicht dargestellten Rastschienenrastierung, eingreifen kann. Die Synchronkörperaußenverzahnung 35 des Synchronkörpers 33 ist in Umlaufrichtung wenigstens einmal, häufig mehrfach, unterbrochen vorzuhalten, um zwischen den einzelnen Abschnitten der Synchronkörperaußenverzahnung 35 Druckstücke oder Federn 50 aufzunehmen. Die Form der Druckstücke, die in den Figuren 3 und 4 mit dem Bezugszeichen 100 und in der Figur 7 mit dem Bezugszeichen 200 bezeichnet ist, bzw. der Federn 50 ist so gestaltet, dass zwischen Druckstück und Schaltmuffe ein gegenseitiger Eingriff möglich ist, wie dargestellt z. B. über eine Schaltmuffenschiebenut 5", die sich an wenigstens eine Schaltmuffenschiebekante 9 oder mehrere korrespondierende Schaltmuffenschiebekanten anlegen kann. In die jeweiligen axialen Richtungen, seitlich neben dem Synchronkörper 33, ist ein Synchronring 17, 19 vorgesehen, der sich zusammen mit einem Kupplungskörper 25, 27 zur Sicherstellung der Synchronisationswirkung der Getriebesynchronisationseinheit 1 gegenseitig abbremsen und ausrichten kann. Die Getriebesynchronisationseinheit 1 zeigt die Zahnräder einer Kupplungsverzahnung und einer Sperrverzahnung im Bereich der äußeren Grenze der radialen Richtung 31 der Synchronringe 17, 19 und der Kupplungskörper 25, 27. Somit liegen die Federn 50 ebenfalls im äußeren Bereich der radialen Richtung 31. Die Federn 50 sind in Bezug auf den Synchronkörper 33 so geformt, dass sie nur wenige Prozent in Bezug auf die radiale Richtung 31 des Synchronkörpers 33 überstehen. Die überstehende Erhöhung der Federn 50 wird durch die innere bzw. untere Seite der Schaltmuffe 3 begrenzt. Ein Abschnitt der Feder 50 und ein Abschnitt der inneren Seite der Schaltmuffe 3 können je nach Schaltmuffenposition aneinander anliegen. Kupplungskörper 25, 27, Synchronringe 17, 19 und Synchronkörper 33 sind gewichtsmäßig im Wesentlichen als Rotationskörper austariert, die Federn 50 tragen nur minimal zur Unwuchterzeugung bei.

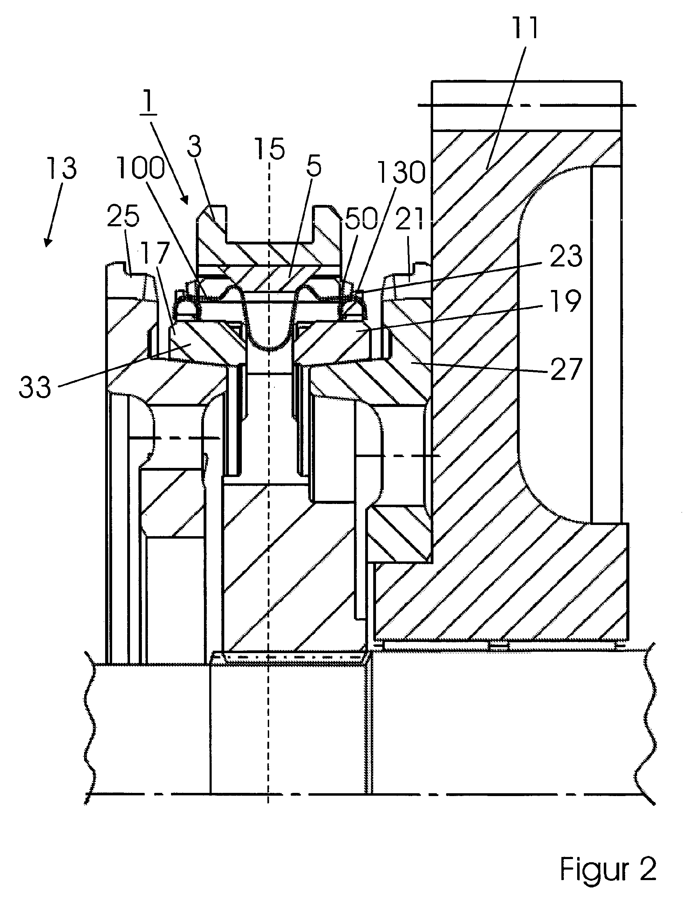

Fig. 2 zeigt einen Ausschnitt in geschnittener Darstellung einer Getriebesynchronisationseinheit 1 der Fig. 1, die als Konussynchronisation in der Form einer Einfachkonussynchronisation dargestellt ist, mit einem ersten Druckstück 100, das in einer für das Druckstück 100 vorgesehenen Ausnehmung des Synchronkörpers 33, insbesondere in Umfangsrichtung des Synchronkörpers 33, angeordnet ist. Häufig werden mehrere Ausnehmungen vorgesehen, jeweils mit einem Druckstück 100 bestückt. Das Druckstück 100 ist federartig. Durch die Feder 50, die das Druckstück 100 darstellt, lässt sich die Schaltmuffenrasterhöhung 5 der Schaltmuffe 3 in einer ersten Stellung, insbesondere in einem mittleren Abstand - einer Stellung in der Mitte 15 der Losräder 11, 13 - rastieren. Das zweite Losrad 13 ist nur in seiner Position angedeutet. Das erste Losrad 11 ist zur Hälfe eingezeichnet. Die Feder 50 ist über ihre Klammerlaschen 130, die links und rechts von der Mitte 15 der Losräder 11, 13 angeordnet sind, in den Synchronringen 15, 17 eingehängt. Die Feder 50 verhindert so das Taumeln der Synchronringe 15, 17. Die Synchronringe 15, 17 ruhen je nach eingelegter Position auf einem Konussitz auf den Kupplungskörpern 25, 27. Das Druckstück 100 dient zum Ansynchronisieren und Synchronisieren bei einer Verschiebung der Schiebemuffe 3 in der Phase des Ansynchronisierens, durch welche die Sperrstellung erreicht wird. Kupplungsverzahnung 21 und Sperrverzahnung 23 werden bei dieser Art der Synchronisierung so in Übereinstimmung gebracht, dass ein Überschieben entlang der Achse 29 (Figur 1) der Schiebemuffe 3 möglich ist. Das Druckstück 100 ist, wie in seitlicher Ansicht zu sehen ist, ein leichtes, kleines, mehrfach gebogenes Blechteil, das in seinen Extrembereichen oder Extremitäten auf den Lagerstellen ruht und dazwischen schwingbeweglich, freischwebend getragen ist, um durch äußere Krafteinwirkung partiell gestaucht und gedehnt zu werden.

Die Fig. 3, 4 und 5 zeigen ein erstes, besonders geeignetes, Ausführungsbeispiel eines erfindungsgemäßen Druckstücks 100, wobei Fig. 6 eine weitere Variante 100' eines Druckstücks 100 zeigt, das sich u. a. durch seine Aufhängung mit Klammem 130 von den Darstellungen der Fig. 3 und 4 unterscheidet. Das federartige Druckstück 100 ist einstückig aus einem flachen Federstahl durch Umformen einzelner Abschnitte des aufgrund seiner Breite 116 und seiner Länge 118 länglichen, im Wesentlichen rechteckigen, nach einer Ausgestaltung auch quadratischen, Federelements gebildet worden. Das Federelement behält nach der Herstellung im Wesentlichen seine flache Form mit einer geringen Höhe 120 im Vergleich zur Länge 118 und zur Breite 116 bei, so dass das federartige Druckstück 100 als Silhouette einer flachen, länglichen Zentralebene 132 angesehen werden kann, die in ihrem mittleren Bereich 110 durch einen auf die Unterseite des Druckstückes hinweisenden Schwenkbogen 128 durchbrochen ist. Der Schwenkbogen 128 mündet in einen ersten Anschlagsbogen 102 und einen zweiten Anschlagsbogen 104. Die Anschlagsbögen 102, 104 stehen aus der Zentralebene 132 in der Größenordnung der Höhe der Klammern 106, 108 in entgegengesetzter Richtung zu den Klammern 106, 108 hervor. Die Anschlagsbögen 102, 104, zusammen mit dem Schwenkbogen 128, haben in seitlicher Ansicht, wie in Fig. 3 dargestellt, eine Wellenfronterscheinung. Der jeweilige Anschlagsbogen 102, 104 geht in einen flachen Auslaufbereich 112, 114 über, an den sich die Klammerlasche, aufgeteilt in drei Klammerlaschen 122, 124, 126, anschließt. An den einen Auslaufbereich 114 schließt sich die erste Klammer 106 an, während an den zweiten Auslaufbereich 112 die zweite Klammer 108 angeschlossen ist. Die Klammer 106 bzw. 108 setzt sich aus mehreren Klammerlaschen 122, 124, 126 zusammen. Die Klammerlaschen 122, 124, 126 sind so gestaltet, dass Aufnahme- oder Haltefinger eines jeweiligen Synchronrings, so wie in Fig. 2 dargestellt, einfahren können, so dass das Druckstück 100 über die Klammerlaschen 122, 124, 126 mit den Haltefingern der Synchronringe ein Lager bilden. Im Übrigen ist das Druckstück 100 selbsttragend und freitragend. Der Schwenkbogen 128, der größer ist als die beiden Anschlagsbögen 102 und 104, stellt das längsbewegliche Ausgleichselement für Bewegungen, die vor allem entlang der Länge 118 des Druckstücks 110 verlaufen, dar. Durch die wellenförmige Auslenkung aus der Zentralebene 132 der Anschlagsbögen 102, 104 und des Schwenkbogens 128 erfährt das Druckstück 100 bei horizontalen Bewegungen entlang der Achse 29 der Getriebesynchronisationseinheit 1 der Schaltmuffe 3 nur geringfügige Verwindungen in Bezug auf seine Breite 116. Die größte Klammerlasche 122 ist mehrfach gefaltet. Die beiden kürzeren Klammerlaschen 124, 126 sind einfach zur Unterseite des Druckstücks 100 umgebogen. Die Faltungstechnik der Klammern 106, 108 aus mehreren Klammerlaschen 122, 124, 126 lässt als Ausgangsmaterial einen flachen Federstahl zu, wobei hierdurch eine sichere Lagerung des Druckstücks 100 zwischen der Synchronkörperaußenverzahnung 35 des Synchronkörpers 33 garantiert werden kann.

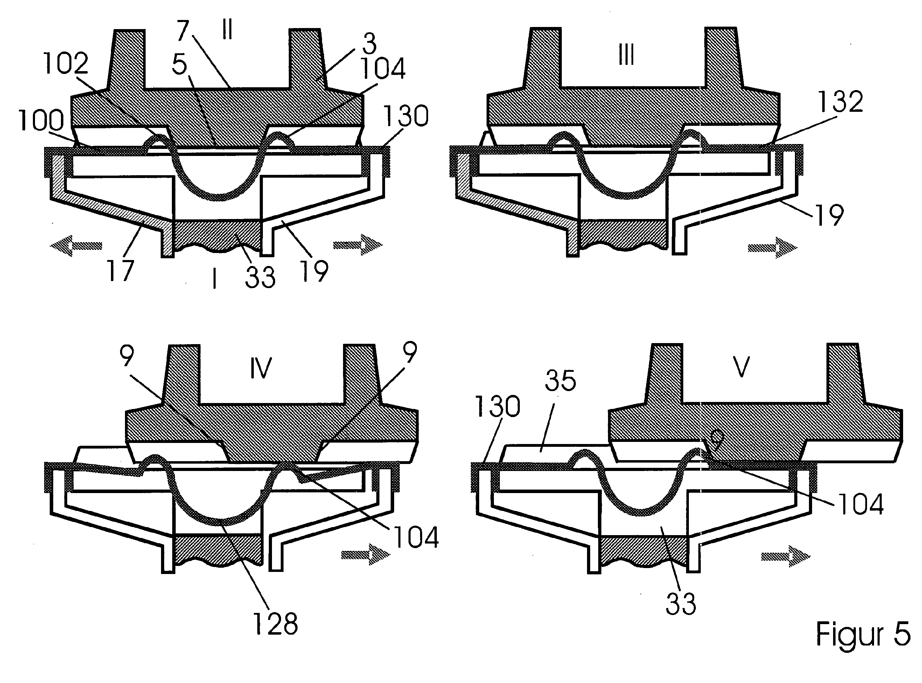

Fig. 5 zeigt verschiedene Positionen der Schaltmuffe 3, die in horizontaler Richtung, das bedeutet entlang der Achsenrichtung des Synchronkörpers 33, über das Druckstück 100 hinweg verschiebbar ist. Die Schiebekraft ist über die Ringnut 7 in die Schaltmuffe 3 einleitbar und wirkt über die Schaltmuffenrasterhöhung 5 bei Berührung über z. B. die Schaltmuffenschiebekanten 9 auf einzelne Abschnitte des Druckstücks, insbesondere die Anschlagsbögen 102, 104. Das Druckstück 100 ist über die nach unten gebogene Klammerlasche 130, die senkrecht steht, an den Synchronringen 17, 19 befestigt. In einer ersten Sperrposition I liegt das Druckstück 3 in einer Neutralposition II. Diese Position lässt sich auch gemeinhin als Ausgangslage bezeichnen. Bei der Neutralposition der Schaltmuffe 3 liegt keiner der beiden Gänge im eingelegten Zustand. Soll nun einer der beiden Gänge, z. B. der Gang über das rechte Losrad, eingelegt werden, so wird durch ein leichtes seitliches Verschieben, in diesem Falle nach rechts, der Schaltmuffe 3 das federartige Druckstück 100 auf die eine Seite hin gestaucht, während die andere Seite des Druckstücks 100 gestreckt wird. Der Schwenkbogen 128 dient als längsbewegliches Ausgleichselement. Wenn die Schaltmuffenschiebekante 9 der Schaltmuffenrasterhöhung 5 an einem der Anschlagsbögen 102, 104 zur Anlage kommt, hat die Schaltmuffe 3 die Ansynchronisationsposition bzw. den Ansynchronisationsbereich eingenommen. Sperrverzahnung und Schaltmuffenverzahnung bewegen sich aufeinander zu. Unter weiterem Kraftaufwand in Schieberichtung überfährt die Schaltmuffe 3 den Anschlagsbogen 104 in die eine Richtung bzw. den Anschlagsbogen 102, wenn der zweite, gegenüberliegende durch das spiegelbildliche Losrad gebildete Gang eingelegt werden soll. Das Druckstück 100 kann in der Überschiebeposition IV eine Ausweichbewegung in Richtung auf die unterliegende Zentralachse, das axiale Zentrum, durchführen. Der Anschlagsbogen 102, 104, der durch die Rasterhöhung 5 der Schaltmuffe 3 nach unten weggedrückt wird, liegt in der Überschiebeposition IV näher zum Zentrum der Achse als der nicht überfahrene Anschlagsbogen 102, 104. Gelangt die Schaltmuffe 3 in die geschaltete Sperrposition V, so liegt der überfahrene Anschlagsbogen 104 in einer zurückgeschwungenen, mit der ursprünglichen Neutralposition vergleichbaren Lage. Der Anschlagsbogen 104 stellt dann eine Rastierung für die Schaltmuffenschiebekante 9 dar, die dem Anschlagsbogen 104 am nächsten liegt. In der geschalteten Sperrposition V sind Zahnräder der Synchronkörperaußenverzahnung 35 des Synchronkörpers 33 abschnittsweise frei von der Schaltmuffe 3 bzw. den nach innen weisenden Zähnen. Die Schwingbewegungen erfolgen um eine Zentralebene 132.

Das Druckstück 100', das in der Fig. 6 abgebildet ist, unterscheidet sich von dem zuvor dargestellten Druckstück 100 durch die Klammer 130. Die Klammer 130 ist ebenfalls eine aufgefächerte Klammer. Der mittlere Abschnitt der Klammer 130 ist weiter entfernt von den Anschlagsbögen 102, 104 als die beiden äußeren, kleineren Abschnitte der Klammer 130. Im Übrigen baut sich das Druckstück 100' von einer Seite auf die andere wie folgt auf: An eine erste Klammer 106 schließt sich ein Auslaufbereich 114 an, dem auf der gesamten Breite der Anschlagsbogen 102 folgt. Zu dem ersten Anschlagsbogen 102 gibt es einen zweiten Anschlagsbogen 104, der in seinem Radius und seiner Größe dem ersten Anschlagsbogen 102 entspricht. Der Schwenkbogen 128 hat hierzu einen deutlich größeren Radius. Der Schwenkbogen 128 bietet die spiegelbildliche Achse für den linken und den rechten Teil des Druckstücks 100'. Der zweite Anschlagsbogen 104 führt in den zweiten Auslaufbereich 112, der durch die zweite Klammer 108 endlings begrenzt ist.

Die in der Fig. 7 dargstellte Feder, das Druckstück 200, hat eine ähnliche Klammer 230, wie zuvor in der Fig. 6 beschrieben, nämlich bestehend aus der mittleren Klammerlasche 222, die die breiteste Klammerlasche ist, und den beiden randseitig angebrachten Klammerlaschen 224 und 226, die zu der mittleren Klammerlasche 222 gegengeformt und in Längsrichtung beabstandet angeordnet sind. Die Länge 218 des Druckstücks 200 wird somit im Wesentlichen durch die Entfernung der mittleren Klammerlasche 224 zur gegenüberliegenden mittleren Klammerlasche bestimmt. Die Breite 216 des Druckstücks 200 bestimmt sich aus den drei Klammerlaschen 222, 224, 226. Eine mittlere Zentralebene 232, die über den mittleren Bereich 210 hinausgeht, wird durch den ersten Anschlagsbogen 202 und den zweiten Anschlagsbogen 204 begrenzt. Die Höhe 220 des Druckstücks 200 bestimmt sich insbesondere aus der Höhe der Anschlagsbögen 202, 204 über die Zentralebene 232 hinaus.

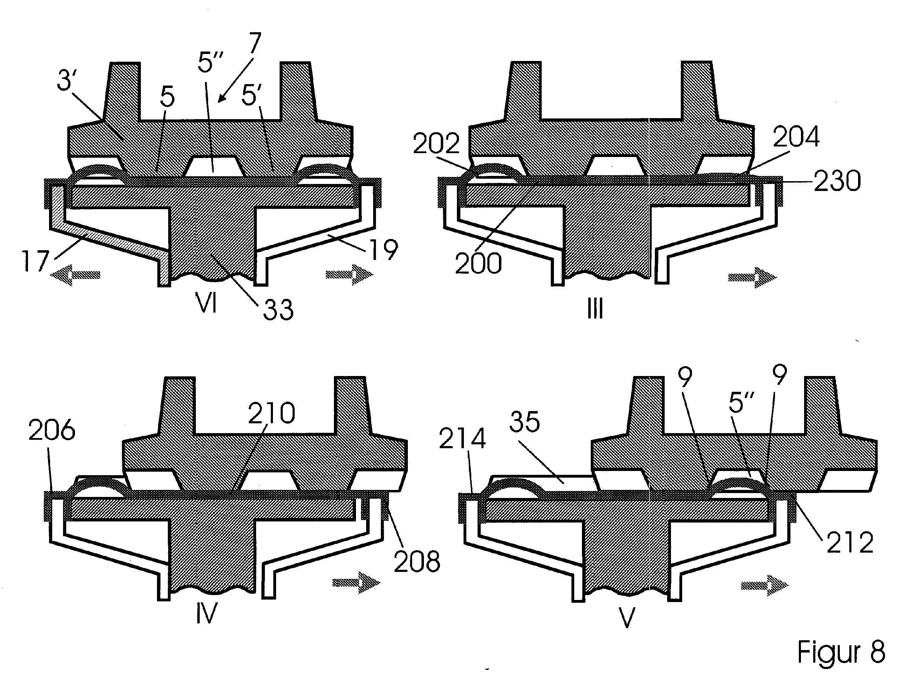

Fig. 8 zeigt in schematischer Darstellung die Verwendung eines silhouettenartig dargestellten Druckstücks 200 der Fig. 7 unter einer Schiebemuffe 3'. Die Schiebemuffe 3' unterscheidet sich von der zuvor dargestellten Schaltmuffe 3 durch zwei in Längsrichtung angeordnete Schaltmuffenrasterhöhungen 5, 5'. Zwischen den beiden Schaltmuffenrasterhöhungen 5, 5' gibt es eine Schaltmuffenschiebenut 5". Die Schaltmuffenschiebenut 5" liegt auf der gegenüberliegenden Seite, betrachtet von der Ringnut 7 der Schiebemuffe 3'. Das Druckstück 200 greift über die beiden Klammern 206, 208 in die beiden Synchronringe 17, 19 ein. In einer mittleren Stellung der Schiebemuffe 3', wenn die Schaltmuffenrasterhöhungen 5, 5' über dem mittleren Bereich 210 angeordnet sind, wird durch die Anschlagsbögen 202, 204 die Schiebemuffe 3' in der Ausgangslage VI gehalten. In diesem Falle liegt die Schaltmuffenschiebenut 5" ungefähr mittig oberhalb des Synchronkörpers 33. An die Anschlagsbögen 202, 204 schließen sich die Auslaufsbereiche 212 und 214 an, an die sich wiederum die Klammern 230 für die Synchronringe 17, 19 anschließen. Die Klammern 230 an den Synchronringen 17, 19 bieten die Lager für das Druckstück 200. Sie gelten somit als die ortsfesten Stellen der Feder, die das Druckstück 200 bildet. Die Anschlagsbögen 202, 204 lassen sich in Abhängigkeit der Schieberichtung der Schiebemuffe 3' so eindrücken, dass im Rahmen einer Ansynchronisationsposition III die Schiebemuffe 3' beginnen kann, zu einer Seite der Synchronisationseinheit zu rutschen. Der Anschlagsbogen 204 wird durch die Schiebemuffe, insbesondere durch die Schaltmuffenschiebekante 9 überdrückt. Bei weiterer Verschiebung der Schiebemuffe 3' wird die Überschiebeposition IV eingenommen, die sich unter anderem dadurch auszeichnet, dass einer der Anschlagsbögen 202, 204 vollständig niedergedrückt ist, so dass die Schiebemuffe 3' mit ihrer Innenverzahnung in den Gegenzähnen der Synchronkörperaußenverzahnung 35 in Längsführung entlang der radialen Achse bewegt werden kann. Wenn der Gang eingelegt ist, in der geschalteten Sperrposition V, wölbt sich der überdrückte Anschlagsbogen 204 in der Schaltmuffenschiebenut 5" wieder auf und ist durch die Schaltmuffenschiebekante 9 seitlich begrenzt. Eine der Schaltmuffenrasterhöhungen 5, 5' ruht in der geschalteten Sperrposition, die sich selbst bis zu einem gewissen Kraftaufwand hält und damit nicht verschiebbar ist, oberhalb eines Auslaufsbereichs 212, 214.

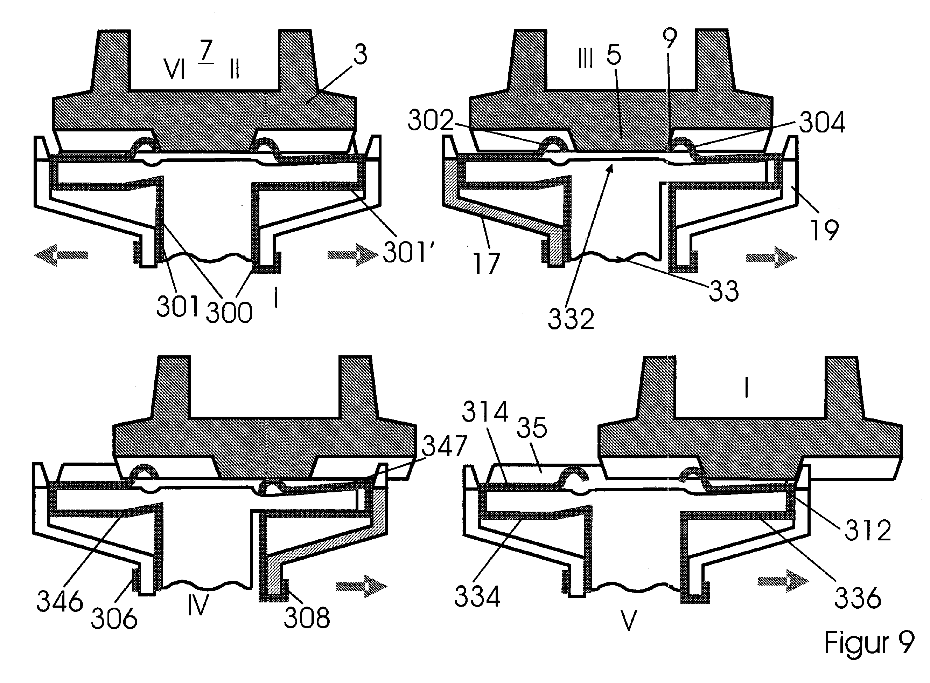

Eine weitere Ausführungsform einer erfindungsgemäßen Feder, die eine Druckstückfunktion als Druckstück 300 übemimmt, ist in den Schaltpositionen Sperrposition I, Neutralposition II, Ausgangslage VI, Ansynchronisationsposition III, Überschiebeposition IV und geschaltete Sperrposition V in Fig. 9 dargestellt. Das Druckstück 300, das sich im Gegensatz zu den Druckstücken 100 und 200 aus zwei Teildruckstücken 301, 301' zusammensetzt und so ein Druckstück 300 bildet, weist ebenfalls, wie in den zuvor beschriebenen Ausführungsbeispielen der Figuren 3, 4, 6 und 7, zwei Anschlagsbögen 302, 304 auf, die über die Schaltmuffenschiebekanten 9 die Schaltmuffe 3 in einer der Sperrpositionen, entweder der Neutralposition II oder der geschalteten Sperrposition V, halten können. Hierzu weist die Schaltmuffe 3 eine Schaltmuffenrasterhöhung 5 auf, die auf der Innenseite, die der Ringnut 7 der Schaltmuffe 3 abgewandte Seite, liegt. Die Federteile 301, 301' sind über geeignete Klammern 306, 308 in den Synchronringen 17, 19 der Getriebesynchronisationseinheit eingehängt. Zwischen den Federteilen 301, 301' des Druckstücks 300 befindet sich der Synchronkörper 33, der vom Rand her durch die Auslaufbereiche 312, 314 begrenzt ist. Die Zentralebene 332, über die sich die Oberseite des Druckstücks 300 im Wesentlichen erstreckt, ist eine unterbrochene Ebene - der für die Rasterhöhung vorgesehene mittlere Bereich in der Neutralstellung III der Rasterhöhung 3 ist aus der Zentralebene 332 ausgespart. Unterhalb der Auslaufbereiche 312, 314 sind Rücklaufarme 334, 336 der Federteile 300, 301 ausgeführt. Das Druckstück 300 sieht wie ein geformtes T-Stück mit Klammerenden am unteren Teil und aufgeworfenen Anschlagsbögen am oberen Teil, ungefähr zur Mitte hin, aus. In der Darstellung der Figur 9 sind zwei unterschiedliche Ausgestaltungen des geteilten Druckstücks 300 dargestellt. Das Federteil 301 ist mit anderen Schrägen ausgestaltet als das Federteil 301'. Zur Förderung der Funktionssicherheit schmiegt sich das jeweilige Federteil 301, 301' des Druckstücks 300 an den Synchronkörper 33 an. Der Synchronkörper 33 bietet daher zusätzliche Schrägen, die zur Klemmsicherheit des jeweiligen Federteils 301, 301' dienen. Das Federteil 301 hat eine Schrägfläche 346, die vor der Abwinkelung des Druckstücks 300 angeordnet ist. Die Abwinkelung umschließt den Rumpf des Synchronkörpers 33. Alternativ lässt sich das Druckstück 300 mit einer Schrägfläche 347 versehen, die zu den Extremitäten des Druckstücks 300 hin ausläuft. Die Schrägfläche 347 weitet im äußeren Bereich des Synchronkörpers 33 den Synchronkörper 33 auf. Ein Druckstück 300 kann sowohl mit jeweils einer Schrägfläche 346 an jedem Federteil 301, 301' als auch mit jeweils einer Schrägfläche 347 ausgestattet sein. Genauso kann eine, wie in Figur 9 dargestellte, wechselweise Schrägflächenverwendung 346, 347 gewählt werden. Der jeweilige Anschlagsbogen 302, 304 begrenzt die Bewegungsfreiheit der Schaltmuffe 3 in horizontaler Ebene durch ein federartiges Vorspannen gegen die Schiebekante 9. Die Synchronkörperaußenverzahnung 35 dient zur Längsverschieblichkeit der Schaltmuffe 3. In der Neutralposition II, die eine Rastposition I darstellt, und auch als Ausgangslage VI zu bezeichnen ist, halten die beiden Anschlagsbögen 302, 304 die Rasterhöhung 5 der Schaltmuffe 3 in einem mittleren Bereich. Der jeweilige Anschlagspunkt 302, 304 kann in der Ansynchronisationsposition III in radialer Richtung zusammengedrückt werden. Der sich anschließende kurze Übergangsbogen zum Auslaufbereich 312, 314 erlaubt das Absinken des Auslaufsbereichs 312, 314 der Feder 301, 301'. Wenn sich die Sperrverzahnung und die Synchronisationsverzahnung, nicht näher in der Figur 9 dargestellt, zueinander günstig ausgerichtet haben und somit das Überschieben der Schaltmuffe 3 erlauben, kann die Überschiebeposition IV durch weiteres Herabdrücken des Anschlagsbogens 302, 304 eingenommen werden. Wenn das Überschieben abgeschlossen ist, schwingt der Anschlagsbogen wieder nach außen. Der Anschlagsbogen 302, 304 hebt die Schaltmuffe 3 in der geschalteten Rastposition V über eine Berührung entlang der Schaltmuffenschiebekante 9.

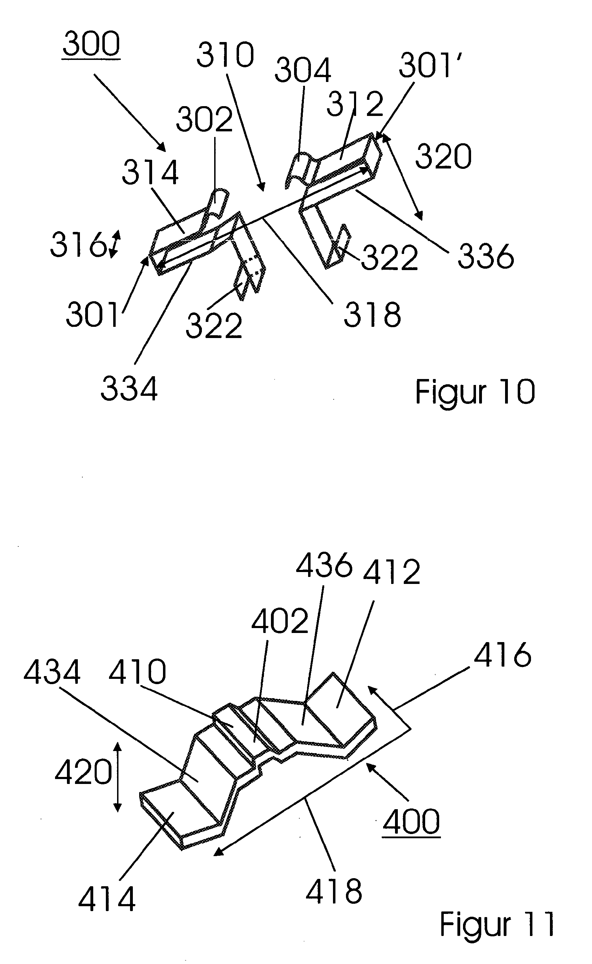

Fig. 10 zeigt umrissartig das in Verwendung beschriebene Druckstück 300 der Fig. 9, das aus den beiden Federteilen 301, 301' zusammengesetzt ist. Der mittlere Bereich 310 ist bei diesem Druckstück ausgespart. An den mittleren Bereich 310 schließen sich die Anschlagsbögen 302, 304 an. Seitlich eines Anschlagsbogens 302, 304 ist der Auslaufbereich 312, 314 vorgesehen, so dass die Länge 318 des Druckstücks 300 durch den mittleren Bereich 310, den addierten Durchmesser der Anschlagsbögen 302, 304 und die Länge der Auslaufsbereiche 312, 314 bestimmt ist. Die Anschlagsbögen 302, 304 haben die gleiche Breite wie die Breite des Auslaufsbereichs 312, 314 und stellen somit die Breite 316 des Druckstücks 300 dar. Parallel zum Auslaufbereich 312, 314 gibt es einen Rücklaufarm 334, 336, der beabstandet von dem Auslaufbereich 312, 314 mit seiner Blechdicke über ein Umlenkstück vorhanden ist. Die Höhe 320 des Druckstücks 300 ergibt sich somit im Wesentlichen aus der Höhe der Anschlagsbögen 302 oder 304, der Beabstandung des Auslaufbereichs 312 oder 314 zum Rücklaufarm 334 oder 336 und der Entfernung zu den Klammerlaschen 322. Für eine exakte Höhenbestimmung müssen die Blechdicken ebenfalls aufgeführt werden. In einer alternativen Ausgestaltung kann der Befestigungsarm für die Klammern 322 über die exakte Position der Klammerlasche 322 hinaus in Richtung zur Mitte des Synchronkörpers hin überstehen. Wie dargestellt, kann eine der beiden Klammerlaschen 322 nach oben gebogen sein, während die zweite Klammerlasche des zweiten Federteils horizontal umgebogen ist.

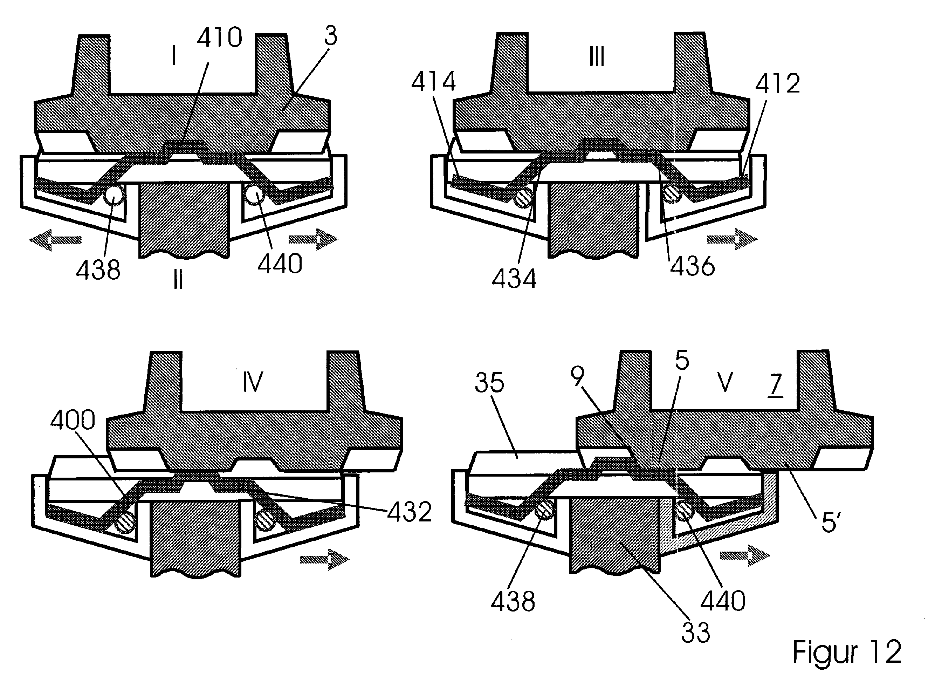

Ein weiteres Ausführungsbeispiel eines erfindungsgemäßen Druckstücks 400 ist in der Fig. 11 schematisch dargestellt, dessen Verwendung einer Getriebesynchronisation der Fig. 12 in ausgewählten Schaltpositionen, nämlich Neutralposition II bzw. Sperrposition I, Ansynchronisationsposition III, Überschiebeposition IV und geschaltete Rastposition V, entnommen werden kann. Das Druckstück 400 sieht ebenfalls wie ein längliches, flaches Druckstück aus, aus dem der mittlere Bereich 410 mit seinem einzigen Anschlagsbogen 402 nach oben heraussteht. Die Höhe 420 ist kleiner als die Breite 416 oder die Länge 418 des Druckstücks 400. Beidseitig zum Anschlagsbogen 402 schließen sich Aufstülpungsschrägen 434, 436 an, an die sich wiederum die Auslaufbereiche 412, 414 anschließen. Die Übergänge der einzelnen Bereiche sind abgewinkelt. Somit sind die Richtungen bzw. die Orientierungen der Auslaufbereiche 412, 414 zu den Aufstülpungsschrägen 434, 436 abgewinkelt. Der mittlere Bereich 410 läuft parallel zur Zentralebene, wie in Fig. 12 in seitlicher Ansicht des Druckstückes 400 dargestellt. Die Ringfedern 438, 440 drücken über die Aufstülpungsschrägen 434, 436 das Druckstück 400 nach außen in die möglichen Schieberichtungen der Schaltmuffe 3. In der Neutralposition sperrt der Anschlagsbogen 410 die Schaltmuffe 3 an einer Längsverschiebung. Das gesamte Druckstück 400 kann über die Schaltmuffe 3 in horizontaler Richtung bei Einleitung in die Überschiebeposition 3 in eine Längsrichtung verschoben werden, indem die eine Aufstülpungsschräge 436 zusammen mit dem Auslaufbereich 412 gestaucht wird, während der andere Aufstülpungsbereich 434 zusammen mit dem Auslaufbereich 414 gestreckt wird. Das Blech für das federartige Druckstück 400 muss somit in der hier beschriebenen Ausführung solche Längenveränderungen aufgrund seiner Biegung und Umformung zulassen. Der grundsätzliche Funktionsablauf ist jedoch auch gewährleistet, wenn das eigentliche Druckstück nicht als federndes Element ausgeführt wird und lediglich die Ringfedern die federnde Funktion übernehmen. Bei weiterer Verschiebung der Schaltmuffe 3 wird das Druckstück 400 auf die Achse des Synchronkörpers 33 hin verschoben. Die Überschiebeposition IV gewährt der Schaltmuffe 3 einen ausreichenden Freilauf für eine Längsverschiebung, bis die geschaltete Sperrposition V eingenommen ist und das Druckstück 400 in seiner Ausgangslage wieder hochschwingt. Die radiale Spannung behält das Druckstück 400 durch die Ringfedern 438, 440; die Längspositionierung und Rastierung der Schaltmuffe 3 erfährt die Schaltmuffe 3 über die Rasterhöhungen 5, 5' und die Schaltmuffenschiebekanten 9. Die Rasterhöhungen 5, 5' liegen auf der gegenüberliegenden Seite der Ringnut 7. Die Synchronkörperaußenverzahnung 35 stellt die längs bewegliche Führungsschiene für die Schaltmuffe 3 dar.

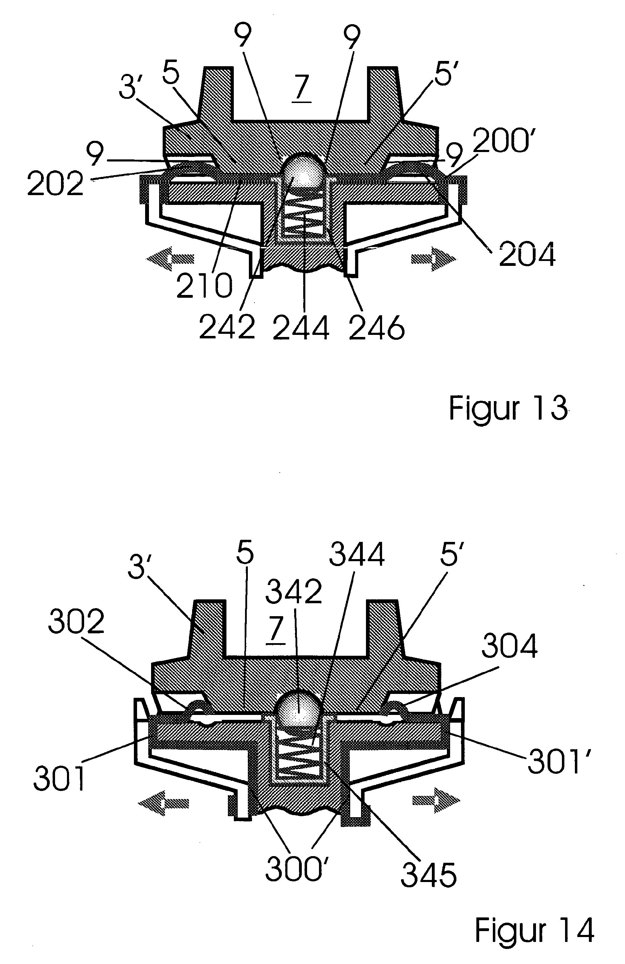

Sollte es aus irgendwelchen Erwägungsgründen, wie z. B. wegen der gewünschten aufzuwendenden Schaltkraft, z. B. für den Nutzkraftfahrzeugbereich, sachdienlich sein, eine weitere Rastierung vorzusehen, so lassen sich die zuvor dargestellten Druckstücke 200, 300, 400 mit einem Kugelbolzen 242, 342, 442 und einer zugehörigen Kugelbolzenfeder 244, 344, 444, die in einer Federführung 246, 345, 446 geführt ist, so wie in den Fig. 13 bis 15 dargestellt, ausführen. Fig. 13 zeigt das Druckstück 200' mit seinen Anschlagsbögen 202, 204 unter einer Schaltmuffe 3' mit zwei Rasterhöhungen 5, 5'. Die beiden nach innen weisenden Schaltmuffenschiebekanten 9 umgreifen in der Neutralposition den Kugelbolzen 242. Der Kugelbolzen 242 wird durch die Kugelbolzenfeder 244 von der Zentralachse weg in die Schiebemuffe 3' gedrückt. Durch eine Verschiebekrafteinleitung über die Ringnut 7 lässt sich der erhöhte Kraftaufwand für das Überdrücken des Kugelbolzen 242 durch die Schaltmuffenschiebekante 9 und durch die Berührung zwischen Schaltmuffenschiebekanten 9 und Anschlagsbogen 202 oder 204 einleiten.

Die Schiebemuffe 3' mit der Schiebemuffennut 7 aus Fig. 14 entspricht der Schiebemuffe 3' der Fig. 13 mit den Rasterhöhungen 5, 5' und der dazwischen liegenden Vertiefung oder Nut. In diese Nut kann über die Kugelbolzenfeder 344 der Kugelbolzen 342 gedrückt werden, wenn die Schiebemuffe 3' in der Sperrposition der Neutralstellung angeordnet ist. Seitlich wird die Schiebemuffe 3' durch die Anschlagsbögen 302, 304 begrenzt, die das jeweilige Ende der Feder 301, 301' darstellen.

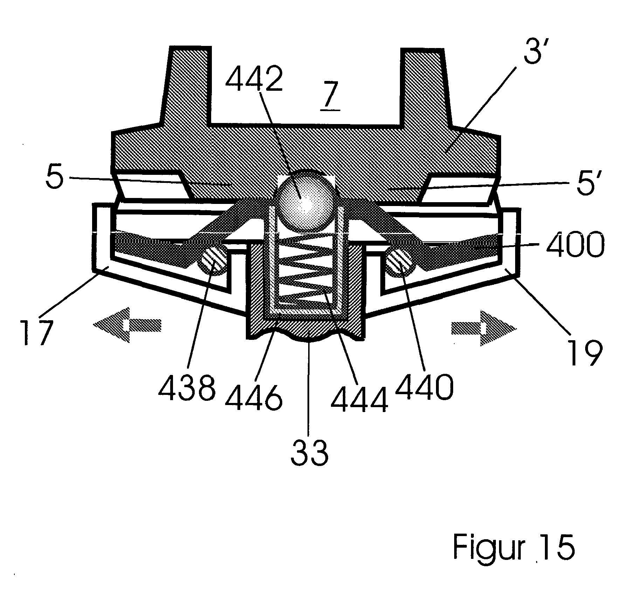

Nach Fig. 15 kann zwischen den beiden Synchronringen 17, 19 eine durch die Ringfedern 438, 440 nach außen vorgespannte druckstückartige Feder 400 so gestaltet werden, dass der mittlere Bereich des Druckstücks 400 mit einem Kugelbolzen 442, der federvorgespannt durch die Kugelbolzenfeder 444 ist, aufgebaut werden. Zur Längsführung liegt die Kugelbolzenfeder 444 in der Federführung 446. Die über die Ringnut 7 eingeleitete Kraft müsste dann den Kugelbolzen 442 neben den in früheren Figuren dargestellten Anschlagsbögen herunterdrücken, damit eine Längsverschiebung der Schiebemuffe möglich ist. Der Synchronkörper 33 bietet die Ausnehmung, damit die Federführung 446 mit der Kugelbolzenfeder 444 und dem darüber liegenden Kugelbolzen 442 aufgenommen werden können. Die Schiebemuffe 3' mit der Ringnut 7 und den Rasterhöhungen 5, 5' ist aus vergleichbaren Darstellungen der zuvor beschriebenen Figuren bekannt.

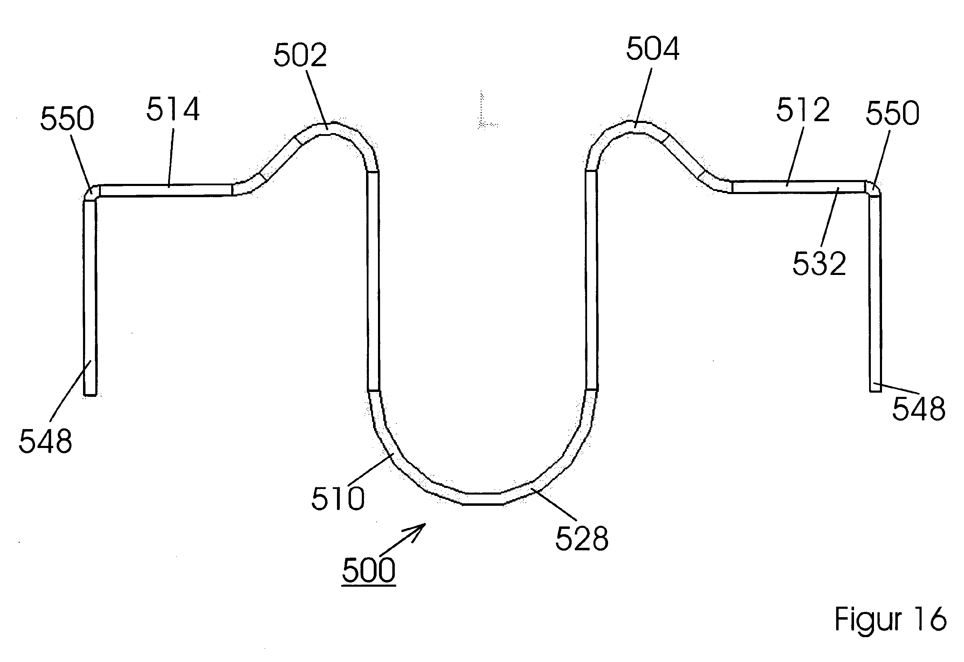

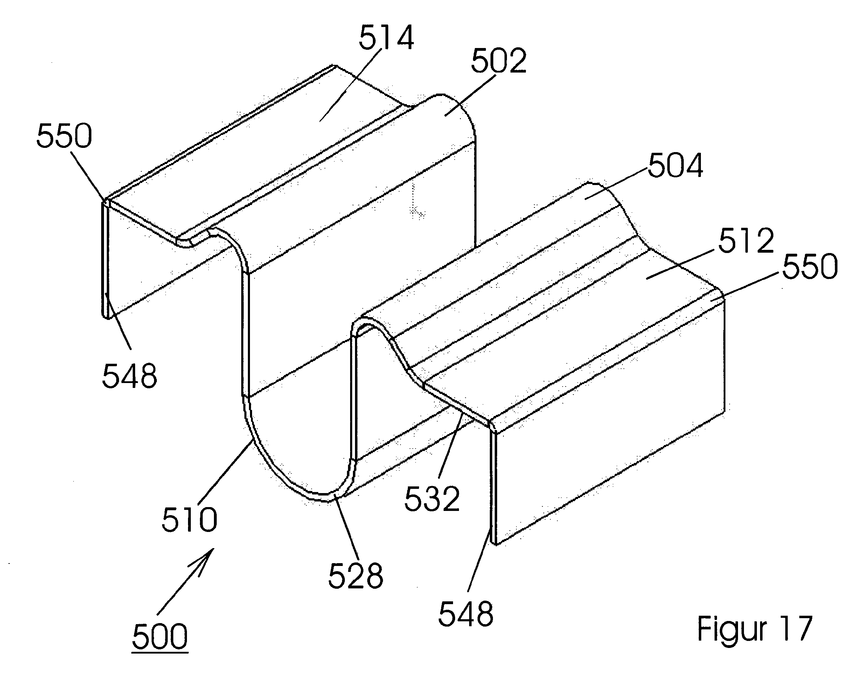

Die Figuren 16 und 17 zeigen eine weitere Ausführungsform eines erfindungsgemäßen Druckstücks 500, das auf einige wesentliche Bereiche reduziert worden ist. Im Übrigen lässt es sich mit den Darstellungen in den Figuren 3, 4 und 5 vergleichen. Aus der Zentralebene 532 stehen in unterschiedliche Richtungen Abschnitte des einfach zusammenhängenden Druckstücks 500 hinaus. Das Druckstück 500 hat in entgegengesetzte Richtungen weisende Bögen, nämlich wenigstens einen Anschlagsbogen 502, vorzugsweise zwei Anschlagsbögen 502, 504, und einen Schwenkbogen 528. In dem Konstruktionsbeispiel der Figuren 16 und 17 sind die am Ende sich abzeichnenden Endbereiche 548 gleichgerichtet zu dem Ausweichbewegungen anbietenden Schwenkbogen 528. Die Endbereiche 548 schließen sich an den Auflageknicken 550 an, die die Endbereiche 548 tragen. Jedem Anschlagsbogen 502, 504 ist ein Auslaufbereich 512, 514 zugeordnet, der bis zu den Auflageknicken 550 reicht. Eine Lagerung des Druckstücks 500 kann an einer geeigneten Stelle in den Extremitäten des Druckstücks 500 gesucht werden, z. B. in den Auslaufbereichen 512, 514, den Auflageknicken 550 oder auch in den Endbereichen 548. Der mittlere Bereich 510 des Druckstücks 500 fällt mit dem Schwenkbogen 528 zusammen.

Die Erfindung ist im Wesentlichen durch fünf unterschiedliche Ausführungsbeispiele mit entsprechenden Abwandlungen und Varianten dargestellt worden. Welche Ausführungsform für den vorliegenden Getriebesynchronisationsfall zu bevorzugen ist, ergibt sich aus der Wahl des geeigneten Kraft-Wege-Diagramms zu jedem einzelnen Druckstück. So zeichnet sich ein Ausführungsbeispiel durch die automatische Adaptierung an einen möglichen Reibbelagverschleiß aus, während ein anderes Druckstück bevorzugt wird, wenn die Fertigung oder die leichte Montage in den Vordergrund gerückt wird. Je nach Anwendungsgebiet, ob Personenkraftfahrzeugbereich oder Nutzkraftfahrzeugbereich, ist das Druckstück zu bevorzugen, das entweder eine hohe Rastierkraft erlaubt oder eine möglichst geringe Rastierkraft. In Bezug auf die Zuverlässigkeit und die Darbietung aller geforderten Sperr- und Rastierpositionen sind alle vorgestellten Ausführungsbeispiele nahezu ebenbürtig.

Zum Umfang der vorliegenden Erfindung gehört es auch, anders geformte blechartige Druckstücke zu gestalten, die mit einem oder drei Anschlagsbögen aufgebaut sind. Genauso lassen sich die Druckstücke auch durch eine Feder-Klammer-Kombination einhängen und mit den Synchronringen verspannen.

Durch die Verlagerung der Funktion der Schaltschienenrastierung direkt in die Synchronisierung werden viele wunschgemäße Erwartungen durch die vorliegende Erfindung erfüllt, so kann zum Beispiel die Schaltschienenrastierung wegfallen. Die Integration von Funktionen anderer Bauteile direkt in das Druckstück bietet zudem ein erhebliches Einsparpotential an Teilen und damit auch Kosten, so entfallen mit überflüssig gewordenen Bauteilen z. B. auch zahlreiche Bearbeitungsvorgänge.

**Bezugszeichenliste:**

| Bezugszeichen | Bedeutung |
|---|---|
| 1 | Getriebesynchronisationseinheit |
| 3, 3' | Schaltmuffe, insbesondere Schiebemuffe |
| 5 | Schaltmuffenrasterhöhung, insbesondere in der Form eines Einsatzstücks |
| 5' | Zweite Schaltmuffenrasterhöhung |
| 5" | Schaltmuffenschiebenut |
| 7 | Ringnut der Schaltmuffe |
| 9 | Schaltmuffenschiebekante |
| 11 | Erstes Losrad |
| 13 | Zweites Losrad |
| 15 | Mitte der Losräder |
| 17 | Erster Synchronring |
| 19 | Zweiter Synchronring |
| 21 | Kupplungsverzahnung |
| 23 | Sperrverzahnung |
| 25 | Erster Kupplungskörper |
| 27 | Zweiter Kupplungskörper |
| 29 | Achse |
| 31 | Radiale Richtung |
| 33 | Synchronkörper |
| 35 | Synchronkörperaußenverzahnung |
| | |
| 50 | Feder |
| | |
| 100 | Druckstück, der ersten Art |
| 100' | Druckstück, ähnlich zu Druckstück 100 |
| 102 | Erster Anschlagsbogen |
| 104 | Zweiter Anschlagsbogen |
| 106 | Erste Klammer |
| 108 | Zweite Klammer |
| 110 | Mittlerer Bereich |
| 112 | Rechter Auslaufbereich |
| 114 | Linker Auslaufbereich |
| 116 | Breite |
| 118 | Länge |
| 120 | Höhe |
| 122 | Klammerlasche, insbesondere breite Klammerlasche |
| 124 | Klammerlasche, insbesondere gegengeformte, kurzeKlammerlasche |
| 126 | Klammerlasche, insbesondere gegengeformte, kurzeKlammerlasche |
| 128 | Schwenkbogen |
| 130 | Klammerlasche, insbesondere senkrechte Klammerlasche |
| 132 | Zentralebene |
| | |
| 200 | Druckstück, der zweiten Art |
| 200' | Druckstück, der zweiten Art in alternativer Ausführung |
| 202 | Erster Anschlagsbogen |
| 204 | Zweite Anschlagsbogen |
| 206 | Erste Klammer |
| 208 | Zweite Klammer |
| 210 | Mittlerer Bereich |
| 212 | Rechter Auslaufbereich |
| 214 | Linker Auslaufbereich |
| 216 | Breite |
| 218 | Länge |
| 220 | Höhe |
| 222 | Klammerlasche, insbesondere breite Klammerlasche |
| 224 | Klammerlasche, insbesondere gegengeformte, kurze Klammerlasche |
| 226 | Klammerlasche, insbesondere gegengeformte, kurze Klammerlasche |
| 230 | Klammerlasche, insbesondere senkrechte Klammerlasche |
| 232 | Zentralebene |
| 242 | Kugelbolzen |
| 244 | Kugelbolzenfeder |
| 246 | Federführung |
| 300 | Druckstück, der dritten Art |
| 300' | Druckstück, der dritten Art in alternativer Ausführung |
| 301 | Federteil, insbesondere spiegelbildlicher Teil zu Federteil 301' |
| 301' | Federteil, insbesondere spiegelbildlicher Teil zu Federteil 301 |
| 302 | Erster Anschlagsbogen |
| 304 | Zweiter Anschlagsbogen |
| 306 | Erste Klammer |
| 308 | Zweite Klammer |
| 310 | Mittlerer Bereich |
| 312 | Rechter Auslaufbereich |
| 314 | Linker Auslaufbereich |
| 316 | Breite |
| 318 | Länge |
| 320 | Höhe |
| 322 | Klammerlasche, insbesondere breite Klammerlasche |
| 332 | Zentralebene |
| 334 | Erster Rücklaufarm |
| 336 | Zweiter Rücklaufarm |
| 342 | Kugelbolzen |
| 344 | Kugelbolzenfeder |
| 345 | Federführung |
| 346 | Einzugsschräge, der ersten Art (innenliegend) |
| 347 | Einzugsschräge, der zweiten Art (nach außen weisend) |
| | |
| 400 | Druckstück, der vierten Art |
| 402 | Anschlagsbogen |
| 410 | Mittlerer Bereich |
| 412 | Rechter Auslaufbereich |
| 414 | Linker Auslaufbereich |
| 416 | Breite |
| 418 | Länge |
| 420 | Höhe |
| 432 | Zentralebene |
| 434 | Erste Aufstülpungsschräge |
| 436 | Zweite Aufstülpungsschräge |
| 438 | Erste Ringfeder |
| 440 | Zweite Ringfeder |
| 442 | Kugelbolzen |
| 444 | Kugelbolzenfeder |
| 446 | Federführung |
| | |
| 500 | Druckstück, insbesondere Rudimentärausführung |
| 502 | Erster Anschlagsbogen |
| 504 | Zweiter Anschlagsbogen |
| 510 | Mittlerer Bereich |
| 512 | Rechter Auslaufbereich |
| 514 | Linker Auslaufbereich |
| 528 | Schwenkbogen |
| 532 | Zentralebene |
| 548 | Endbereich |
| 550 | Auflageknick |
| | |
| I | Sperrposition |
| II | Neutralposition |
| III | Ansynchronisationsposition oder Ansynchronisationsbereich |
| IV | Überschiebeposition |
| V | Geschaltete Sperrposition |
| VI | Ausgangslage |

## Patentansprüche

1. Getriebesynchronisationseinheit (1) zum Ansynchronisieren wenigstens eines Losrades (11, 13) mit einer Schaltmuffe (3, 3'), die eine Ansynchronisation und eine Überschiebefunktion bietet
und die eine erste Rastierposition (V) für die Schaltmuffe (3, 3') bietet, indem ein örtliches Fixieren der Schaltmuffe (3, 3') erfolgt,
**dadurch gekennzeichnet, dass**
eine blattähnlich geformte Feder (50, 100, 100', 200, 200', 300, 300', 400, 500) die Schaltmuffe (3, 3') in einer zweiten Position (II) rastieren kann, wobei die Feder (50, 100, 100', 200, 300, 400, 500) daneben das Rastieren in der ersten Rastierposition (V), eine Ansynchronisationsfunktion und die Überschiebefunktion für die Getriebesynchronisation bietet, und direkt an der Schaltmuffe anliegt.

2. Getriebesynchronisationseinheit (1) nach Anspruch 1, **dadurch gekennzeichnet, dass** die zweite rastierte Position (V) in einer Neutralposition (II), in der die Schaltmuffe (3, 3') entfernt von dem einen Losrad (11 oder 13), insbesondere zwischen zwei Losrädern (11, 13), vorzugsweise mittig (15), platziert ist, vorhanden ist,
und dass die erste rastierte Position (V) in einer geschalteten Stellung vorhanden ist.

3. Getriebesynchronisationseinheit (1) nach Anspruch 1 oder 2, **dadurch gekennzeichnet, dass**
die Feder (50, 100, 100', 200, 200', 300, 300', 400, 500) funktionell ein Druckstück zur Synchronisationsverbesserung, insbesondere zur Ansynchronisationsgewährleistung, zwischen einer Sperrverzahnung (23) und einer Kupplungsverzahnung (21) der Schaltmuffe (3, 3') und eines Synchronrings (17, 19) innerhalb der Getriebesynchronisationseinheit (1) ist, wobei sie sonst in der Neutralposition (II) die Schaltmuffe (3, 3') an einer axialen Verschiebung hemmt, und insbesondere darüber hinaus noch wenigstens eine weitere Funktion darbietet.

4. Getriebesynchronisationseinheit (1) mit wenigstens einem federartigen, flachen Druckstück (50, 100, 100', 200, 200', 300, 300', 400, 500), das über wenigstens einen Rand (112, 212, 312, 412, 512 oder 114, 214, 314, 414, 514) in einem Synchronring (17 oder 19), insbesondere über seinen Rändern (112, 212, 312, 412, 512, 114, 214, 314, 414, 514) in zwei Synchronringen (17, 19), der Getriebesynchronisationseinheit (1) eingehängt ist, wobei ein mittlerer Teil (110, 210, 310, 410, 510) des Druckstücks (50, 100, 100', 200, 200', 300, 300', 400, 500) zum Rastieren eine axiale Lageverschiebung einer Schaltmuffe (3, 3') durch eine radiale Bewegung, insbesondere kraftfolgende Ausweichbewegung, erlaubt.

5. Getriebesynchronisationseinheit (1) nach Anspruch 4, **dadurch gekennzeichnet, dass** die Getriebesynchronisationseinheit (1) nach einem Konussynchronisationsprinzip arbeitet und das Druckstück (50, 100, 100', 200, 200', 300, 300', 400, 500) eine Feder ist, die in ihrer Ausgangslage (VI) die Schaltmuffe (3, 3') in einer rastierten Position (II) halten kann.

6. Getriebesynchronisationseinheit (1) nach Anspruch 5, **dadurch gekennzeichnet, dass** die rastierte Position in einer Neutralposition (II) und eine zweite rastierte Position in einer geschalteten Sperrposition (V) der Getriebesynchronisationseinheit (1) vorhanden sind.

7. Getriebesynchronisationseinheit (1) nach einem der vorhergehenden Ansprüche, **dadurch gekennzeichnet, dass** nur die Feder (50, 100, 100', 200, 200', 300, 300', 400, 500) die Funktion eines Druckstücks übernimmt, so dass keine weiteren, andersformigen Bauteile in der Getriebesynchronisationseinheit (1) vorhanden sind, die Druckstückfunktionen übernehmen.

8. Getriebesynchronisationseinheit (1) nach einem der Ansprüche 4 bis 7, **dadurch gekennzeichnet, dass** das Druckstück (50, 100, 100', 200, 200', 300, 300', 400, 500), das insbesondere aus einem Federstahl geformt ist, einen Ansynchronisationsbereich (III) aufweist, der ein Anlegen wenigstens eines Synchronrings (17, 19) an wenigstens einer Reibfläche und damit ein radiales Verdrehen des Synchronrings (17, 19) zum Erreichen der Sperrposition (V) zulässt und dass das Druckstück (50, 100, 100', 200, 200', 300, 300', 400, 500) eine Überschiebeposition (IV) durch federnde Nachgiebigkeit des Druckstücks (50, 100, 100', 200, 200', 300, 300', 400, 500), wobei insbesondere das Druckstück (50, 100, 100', 200, 200', 300, 300', 400, 500) eine Federbewegung vollständig über seine Breite (116, 216, 316, 416) durchführt, in radialer Richtung (31) auf eine Welle einnehmen kann.

9. Getriebesynchronisationseinheit (1) nach einem der Ansprüche 4 bis 8, **dadurch gekennzeichnet, dass** das federartige Druckstück (50,100,100', 200, 200', 300, 300', 400, 500) auf eine Mittelachse (29) der Welle ausgerichtet derart vorgespannt ist, dass die Synchronringe (17, 19) zueinander in der Getriebesynchronisationseinheit (1) angezogen sind, so dass sie taumelfrei gelagert sind.

10. Getriebesynchronisationseinheit (1) nach einem der vorhergehenden Ansprüche, **dadurch gekennzeichnet, dass** die Schaltmuffe (3, 3') eine Rastkontur (5, 5', 5"), insbesondere eine Rasterhöhung (5, 5'), auf einer Innenseite aufweist, die vorzugsweise die Form eines gleichschenkligen Trapezes hat.

11. Getriebesynchronisationseinheit (1) nach Anspruch 10, **dadurch gekennzeichnet, dass** die Feder (50, 100, 100', 200, 200', 300, 300', 400, 500) wenigstens einen von der Mittelachse (29) der Welle wegweisenden Anschlagsbogen (102, 104, 202, 204, 302, 304, 402, 502, 504) hat, der die Sicherung der rastierten Position über die Rastkontur (5, 5', 5") in der Neutralposition (II) vornimmt.

12. Getriebesynchronisationseinheit (1) nach einem der vorhergehenden Ansprüche, **dadurch gekennzeichnet, dass** das Druckstück (50, 100, 100', 200, 200', 300, 300', 400, 500) einen in jede der Schieberichtungen der Schaltmuffe (3, 3') einen über Rastkontur (5, 5', 5") in Neutralposition (II) bewegungshemmenden Anschlagsbogen (102, 104, 202, 204, 302, 304, 402, 502, 504) offeriert.

13. Getriebesynchronisationseinheit (1) nach einem der vorhergehenden Ansprüche, **dadurch gekennzeichnet, dass** in der Sperrposition (I), insbesondere in der Neutralposition (II), das Druckstück (50, 100, 100', 200, 200', 300, 300', 400, 500) freitragend bis auf seine Synchronringlagerung (122, 124, 126, 130, 222, 224, 226, 230, 306, 308, 322) und eine, insbesondere zwei, Schaltmuffenrastierung (5, 5') ist.

14. Getriebesynchronisationseinheit (1) nach einem der Ansprüche 1 bis 13, **dadurch gekennzeichnet, dass** eine an einen Synchronkörper (33) anliegende Ringfeder (438, 440) mit einer von dem Synchronkörper (33) nach Außen wegweisenden Spannung das Druckstück (400) gegen den Synchronring (17, 19) spannt, um es an dem Synchronkörper (33) zu lagern.

15. Getriebesynchronisationsverfahren, insbesondere für eine Getriebesynchronisationseinheit (1) nach einem der Ansprüche 1 bis 14, ein federartiges Druckstück (50, 100, 100', 200, 200', 300, 300', 400, 500) benutzend, das in wenigstens einen Synchronring (17, 19) eingehängt ist und mit einer Schaltmuffe (3, 3') zusammenwirkt, mit den Phasen Neutrallage, Ansynchronisieren, Synchronisieren, Entsperren, Freiflugphase, Einspurphase und Schaltstellung,
**dadurch gekennzeichnet, dass**
sowohl in der Neutrallage (II) als auch in der Schaltstellung (V) ein örtliches Fixieren der Schaltmuffe (3, 3') durch das Druckstück (50, 100, 100', 200, 200', 300, 300', 400, 500) im Sinne einer Rastierung erfolgt.

## Claims

1. A transmission synchromesh unit (1) for initiating synchronization of at least one loose gear (11, 13) with a shift sleeve (3, 3'), which offers a synchronization initiation and a slide-over function
and which provides a first detent position (V) for the shift sleeve (3, 3'), by an on-site fixation of the shift sleeve (3, 3'),
**characterized in that**
a leaf-like shaped spring (50, 100, 100', 200, 200', 300, 300', 400, 500) can engage the shift sleeve (3, 3') in a second position (II), whereat the spring (50, 100, 100', 200, 300, 400, 500) offers in addition the detent in the first detent position (V), a synchronization initiation function and the slide-over function for the transmission synchromesh, and is in direct contact with the shift sleeve.

2. The transmission synchromesh unit (1) according to claim 1, **characterized in that** the second detent position (V) is present in a neutral position (II), in which the shift sleeve (3, 3') is placed away from the one loose gear (11 or 13), particularly between two loose gears (11, 13), preferably in the middle (15), and that the first detent position (V) is present in an engaged position.

3. The transmission synchromesh unit (1) according to claim 1 or 2,
**characterized in that**
functionally the spring (50, 100, 100', 200, 200', 300, 300', 400, 500) is a pressure element for synchronization improvement, in particular for guarantee of initiating synchronization, between a locking toothing (23) and a clutch toothing (21) of the shift sleeve (3, 3') and a synchronization ring (17, 19) within the transmission synchromesh unit (1), wherein in the neutral position (II) the spring (50, 100, 100', 200, 200', 300, 300', 400, 500) inhibits the shift sleeve (3, 3') from an axial displacement, and in particular offers at least one further function in addition.

4. The transmission synchromesh unit (1) with at least one spring-like flat pressure element (50, 100, 100', 200, 200', 300, 300', 400, 500), which via at least one rim (112, 212, 312, 412, 512 or 114, 214, 314, 414, 514) is hinged to a synchronizing ring (17 or 19), in particular via its rims (112, 212, 312, 412, 512, 114, 214, 314, 414, 514) in two synchronizing rings (17, 19), of the transmission synchromesh (1), whereat a middle part (110, 210, 310, 410, 510) of the pressure element (50, 100, 100', 200, 200', 300, 300', 400, 500) permits for detent an axial position displacement of a shift sleeve (3, 3') through a radial movement, in particular a force-following evasive movement.

5. The transmission synchromesh unit (1) according to claim 4, **characterized in that** the transmission synchromesh unit (1) operates according to a cone synchronization principle and the pressure element (50, 100, 100', 200, 200', 300, 300', 400, 500) is a spring, which in its starting position (VI) can hold the shift sleeve (3, 3') in a detent position (II).

6. The transmission synchromesh unit(1) according to claim 5, **characterized in that** the detent position is present in a neutral position (II) and a second detent position in a shifted locking position (V) of the transmission synchromesh unit (1).

7. The transmission synchromesh unit (1) according to one of the preceding claims, **characterized in that** only the spring (50, 100, 100', 200, 200', 300, 300', 400, 500) assumes the function of a pressure element, so that no additional differently shaped components are present in the transmission synchromesh unit (1), which assume the pressure element functions.

8. The transmission synchromesh unit (1) according to one of the claims 4 to 7, **characterized in that** the pressure element (50, 100, 100', 200, 200', 300, 300', 400, 500), which is in particular formed of a spring steel, has a synchronization initiation region (III), which allows positioning of at least one synchronizing ring (17, 19) against at least one friction surface and thus allows a radial turning of the synchronizing ring (17, 19) for reaching the locking position (V) and that the pressure element (50, 100, 100', 200, 200', 300, 300', 400, 500) can assume a slide-over position (IV) through springy flexibility of the pressure element (50, 100, 100', 200, 200', 300, 300', 400, 500), wherein in particular the pressure element (50, 100, 100', 200, 200', 300, 300', 400, 500) performs a spring movement completely over its width (116, 216, 316, 416), in radial direction (31) of a shaft.

9. The transmission synchromesh unit (1) according to one of the claims 4 to 8, **characterized in that** the spring-like pressure element (50, 100, 100', 200, 200', 300, 300', 400, 500), oriented to a center axis (29) of the shaft, is preloaded in such manner, that the synchronizing rings (17, 19) are pulled towards each other in the transmission synchromesh unit (1), so that they are mounted wobble-free.

10. The transmission synchromesh unit (1) according to one of the preceding claims, **characterized in that** the shift sleeve (3, 3') has a snap contour (5, 5', 5"), in particular an engagement elevation (5, 5'), on an inner side, which preferably has the form of an isosceles trapezium.

11. The transmission synchromesh unit (1) according to claim 10, **characterized in that** the spring (50, 100, 100', 200, 200', 300, 300', 400, 500) has at least one stop arch (102, 104, 202, 204, 302, 304, 402, 502, 504) which is facing away from the center axis (29) of the shaft, and which carries out the securing of the engaged position via the snap contour (5, 5', 5") in the neutral position (II).

12. The transmission synchromesh unit (1) according to one of the preceding claims, **characterized in that** the pressure element (50, 100, 100', 200, 200', 300, 300', 400, 500) offers a stop arch (102, 104, 202, 204, 302, 304, 402, 502, 504) in each of the sliding directions of the shift sleeve (3, 3') inhibiting movements by snap contour (5, 5', 5") in neutral position (II).

13. The transmission synchromesh unit (1) according to one of the preceding claims, **characterized in that** in the locking position (I), in particular in the neutral position (II), the pressure element (50, 100, 100', 200, 200', 300, 300', 400, 500) lies freely except for its synchronizing ring bearing (122, 124, 126, 130, 222, 224, 226, 230, 306, 308, 322) and one, in particular two, shift sleeve detent (5, 5').

14. The transmission synchromesh unit (1) according to one of the claims 1 to 13, **characterized in that** an annular spring (438, 440), which is in contact with the synchronizer (33), tightens the pressure element (400) against the synchronizing ring (17, 19) with a tension facing away from the synchronizer (33) to the outside in order to place it in contact with the synchronizer (33).

15. A transmission synchromesh method, in particular for a transmission synchromesh unit (1) according to one of the claims 1 to 14, utilizing a spring-like pressure element (50, 100, 100', 200, 200', 300, 300', 400, 500), which is hinged to at least one synchronizing ring (17, 19) and acts together with a shift sleeve (3, 3'), with the phases neutral position, synchronization initiation, synchronization, unlocking, free floating phase, meshing phase and engaged position,
**characterized in that**
both in the neutral position (II) and in the engaged position (V) a local fixing of the shift sleeve (3, 3') occurs through the pressure element (50, 100, 100', 200, 200', 300, 300', 400, 500) in terms of a detent.

## Revendications

1. Unité de synchronisation de transmission (1) pour l'amorce de la synchronisation d'une roue libre (11, 13) avec un manchon de commande (3, 3') qui permet l'amorce d'une synchronisation et une fonction de transfert coulissant et qui offre une première position d'encliquetage (V) pour le manchon de commande (3, 3'), une fixation locale du manchon de commande (3, 3') étant effectuée,
**caractérisée en ce**
**qu'**un ressort (50, 100, 100', 200, 200', 300, 300', 400, 500) formé semblable à une lame peut faire encliqueter le manchon de commande (3, 3') dans une seconde position (II), le ressort (50, 100, 100', 200, 200', 300, 300', 400, 500) permettant de plus l'encliquetage dans la première position d'encliquetage (V), une fonction d'amorce de synchronisation et la fonction de transfert coulissant pour la synchronisation de la transmission et étant appliqué directement au manchon de manoeuvre.

2. Unité de synchronisation de transmission (1) selon la revendication 1, **caractérisée en ce que** la seconde position encliquetée (V) existe dans une position neutre (II) dans laquelle le manchon de commande (3, 3') est placé éloigné de l'une des roues libres (11 ou 13), en particulier entre deux roues libres (11, 13), de préférence au milieu (15) et que la première position encliquetée (V) existe dans une position commutée.

3. Unité de synchronisation de transmission (1) selon la revendication 1 ou 2, **caractérisée en ce que** le ressort (50, 100, 100', 200, 200', 300, 300', 400, 500) est sur de manière fonctionnelle une pièce de pression pour l'amélioration de la synchronisation, en particulier pour garantir l'amorce de synchronisation entre une denture de blocage (23) et une denture d'accouplement (21) du manchon de commande (3, 3') et d'une bague de synchronisation (17, 19) à l'intérieur de l'unité de synchronisation de transmission (1), cependant qu'il empêche sinon dans la position neutre (II) le manchon de commande (3, 3') de se déplacer axialement et offre en particulier en plus encore au moins une autre fonction.

4. Unité de synchronisation de transmission (1) avec au moins une pièce de pression plate de type ressort (50, 100, 100', 200, 200', 300, 300', 400, 500) qui est suspendue par au moins un bord (112, 212, 312, 412, 512 ou 114, 214, 314, 414, 514) dans une bague de synchronisation (17 ou 19), en particulier par ses bords (112, 212, 312, 412, 512, 114, 214, 314, 414, 514) dans deux bagues de synchronisation (17, 19) de l'unité de synchronisation de transmission (1), cependant qu'une partie centrale (110, 210, 310, 410, 510) de la pièce de pression (50, 100, 100', 200, 200', 300, 300', 400, 500) permet pour l'encliquetage un déplacement de position axial d'un manchon de commande (3, 3') par un mouvement radial, en particulier par un mouvement de déport suivant la force.

5. Unité de synchronisation de transmission (1) selon la revendication 4, **caractérisée en ce que** l'unité de synchronisation de transmission (1) fonctionne selon un principe de synchronisation de cône et que la pièce de pression (50, 100, 100', 200, 200', 300, 300', 400, 500) est un ressort qui, dans sa position de départ (VI), peut maintenir le manchon de commande (3, 3') dans une position encliquetée (II).

6. Unité de synchronisation de transmission (1) selon la revendication 5, **caractérisée en ce que** la position encliquetée existe dans une position neutre (II) et une seconde position encliquetée dans une position de blocage commutée (V) de l'unité de synchronisation de transmission (1).

7. Unité de synchronisation de transmission (1) selon l'une des revendications précédentes, **caractérisée en ce que** seulement le ressort (50, 100, 100', 200, 200', 300, 300', 400, 500) assume la fonction d'une pièce de pression si bien qu'aucune autre pièce constituante d'une autre forme qui assume les fonctions de la pièce de pression n'existe dans l'unité de synchronisation de transmission (1).

8. Unité de synchronisation de transmission (1) selon l'une des revendications 4 à 7, **caractérisée en ce que** la pièce de pression (50, 100, 100', 200, 200', 300, 300', 400, 500) qui en particulier est formée en acier à ressort, présente une zone d'amorce de synchronisation (III) qui admet une application d'au moins une bague de synchronisation (17, 19) sur au moins une surface de friction et donc une torsion radiale de la bague de synchronisation (17, 19) pour atteindre la position de blocage (V) et que la pièce de pression (50, 100, 100', 200, 200', 300, 300', 400, 500) peut prendre une position de transfert (IV) sur un arbre dans le sens radial (31) par résilience élastique de la pièce de pression (50, 100, 100', 200, 200', 300, 300', 400, 500), cependant qu'en particulier la pièce de pression (50, 100, 100', 200, 200', 300, 300', 400, 500) effectue un mouvement de ressort entièrement sur sa largeur (116, 216, 316, 416),

9. Unité de synchronisation de transmission (1) selon l'une des revendications 4 à 8, **caractérisée en ce que** la pièce de pression de type ressort (50, 100, 100', 200, 200', 300, 300', 400, 500) est précontrainte en étant orientée sur un axe central (29) de l'arbre de telle manière que les bagues de synchronisation (17, 19) sont attirées l'une vers l'autre dans l'unité de synchronisation de transmission (1) si bien qu'elles sont positionnées sans vacillement.

10. Unité de synchronisation de transmission (1) selon l'une des revendications précédentes, **caractérisée en ce que** le manchon de commande (3, 3') présente un contour d'encliquetage (5, 5', 5"), en particulier un rehaussement d'encliquetage (5, 5'), sur un côté intérieur qui a de préférence la forme d'un trapèze isocèle.

11. Unité de synchronisation de transmission (1) selon la revendication 10, **caractérisée en ce que** le ressort (50, 100, 100', 200, 200', 300, 300', 400, 500) a au moins un arc de butée (102, 104, 303, 304, 302, 304, 502, 504), qui s'écarte de l'axe central (29) de l'arbre, qui assure le maintien de la position encliquetée dans la position neutre (II) par le contour d'encliquetage (5, 5', 5").

12. Unité de synchronisation de transmission (1) selon l'une des revendications précédentes, **caractérisée en ce que** la pièce de pression (50, 100, 100', 200, 200', 300, 300', 400, 500) offre un arc de butée (102, 104, 303, 304, 302, 304, 502, 504) qui empêche le mouvement dans la position neutre (II) dans n'importe quel sens de glissement du manchon de commande (3, 3') par le contour d'encliquetage (5, 5', 5").

13. Unité de synchronisation de transmission (1) selon l'une des revendications précédentes, **caractérisée en ce que**, dans la position de blocage (I), en particulier dans la position neutre (II), la pièce de pression (50, 100, 100', 200, 200', 300, 300', 400, 500) est en porte à faux à part son positionnement de bague de synchronisation (122, 124, 126, 130, 222, 224, 226, 230, 306, 308, 322) et un, en particulier deux encliquetages de manchon de manoeuvre (5, 5').

14. Unité de synchronisation de transmission (1) selon l'une des revendications 1 à 13, **caractérisée en ce qu'**un ressort annulaire (438, 440) qui est appliqué contre un corps de synchronisation (33) serre la pièce de pression (400) contre la bague de synchronisation (17, 19) avec une tension qui s'écarte du corps de synchronisation (33) vers l'extérieur pour la positionner contre le corps de synchronisation (33).

15. Procédé de synchronisation de transmission, en particulier pour une unité de synchronisation de transmission (1) selon l'une des revendications 1 à 14, utilisant une pièce de pression de type ressort (50, 100, 100', 200, 200', 300, 300', 400, 500), qui est suspendue dans au moins une bague de synchronisation (17, 19) et qui coopère avec un manchon de commande (3, 3'), avec les phases position neutre, amorce de synchronisation, synchronisation, déblocage, phase de vol libre, phase d'engagement et position de commutation, **caractérisée en ce**
**qu'**aussi bien en position neutre (II) qu'en position de commutation (V) une fixation locale du manchon de commande (3, 3') est effectuée par la pièce de pression (50, 100, 100', 200, 200', 300, 300', 400, 500) dans le sens d'un encliquetage.
